# EUROPÄISCHE PATENTSCHRIFT

(11) **EP 3 526 030 B1**
(45) Veröffentlichungstag und Bekanntmachung des Hinweises auf die Patenterteilung: **24.06.2020**
(21) Anmeldenummer: 17783753.1
(22) Anmeldetag: 25.09.2017
(51) Int. Cl.: B32B 3/28, B32B 7/12, B32B 15/085, B32B 15/088, B32B 15/09, B32B 15/20, B32B 27/08, B32B 27/10, B32B 27/32, B32B 27/34, B32B 27/36, B32B 29/00, B32B 3/30

(54) **VERBUNDFOLIE UND AUS DER VERBUNDFOLIE HERGESTELLTER BEUTEL**
COMPOSITE FILM AND BAG PRODUCED FROM THE COMPOSITE FILM
FILM COMPOSITE ET SACHET FABRIQUÉ À PARTIR DU FILM COMPOSITE

(30) Priorität: 14.10.2016 AT 509232016
(43) Veröffentlichungstag der Anmeldung: 21.08.2019
(73) Patentinhaber: Constantia Pirk GmbH & Co. KG, 92712 Pirk (DE)
(72) Erfinder: KICK, Markus, 92637 Weiden (DE); BARBISCH, Christian, 2100 Korneuburg (AT)
(74) Vertreter: Patentanwälte Pinter & Weiss OG
(86) Internationale Anmeldenummer: PCT/EP2017/074207
(87) Internationale Veröffentlichungsnummer: WO 2018/069029

(56) Entgegenhaltungen:
- WO-A1-2016/138967
- DE-T2- 69 104 981
- US-A1- 2005 058 790

## Beschreibung

Die Erfindung betrifft eine Verbundfolie bestehend aus einer zumindest einschichtigen Basisschicht, einer zumindest einschichtigen Deckschicht, und einer zwischen der Basisschicht und der Deckschicht angeordneten zumindest einschichtigen Mittelschicht, wobei die Verbundfolie Normalbereiche aufweist, in denen die Basisschicht, die Mittelschicht und die Deckschicht eben aneinanderliegend miteinander verbunden sind und eine basisseitige Oberfläche und eine deckseitige Oberfläche der Mittelschicht sich innerhalb von parallel zur Folienebene und entlang von Soll-Grenzflächen für die basisseitige Oberfläche bzw. deckseitige Oberfläche verlaufenden Toleranzfeldern befinden, wobei die Toleranzfelder üblichen produktionstechnisch bedingten Herstellungstoleranzen entsprechen. Die Erfindung betrifft eine Verbundfolie wie im anhängenden Anspruch 1 definiert. Weitere erfindungsgemässe Verbundfolien sind in den abhängigen Ansprüchen definiert.

Weiters betrifft die Erfindung eine Beutelverpackung, welche die Verbundfolie aufweist.

Als "Beutelverpackung" wird im Zusammenhang mit der gegenständlichen Erfindung allgemein ein Verpackungsbehältnis bezeichnet, das aus Folienmaterial besteht oder zu wesentlichen Teilen daraus aufgebaut ist. Beispielsweise werden in nicht einschränkender Weise als Beutelverpackungen im Sinne der Erfindung Sachet, Drei- und Vierrandbeutel, Beutel mit von zwei Seiten eingelegter Bodenfalte, Beutel mit Seitenflächen, Beutel mit (gegebenenfalls geraden) Bodenflächen, Beutel mit zusätzlichen Ausgießhilfen, wie etwa Ausgießer oder Spouts, Beutel-Flowpacks mit überlappender Siegelnaht (Siegelung Innenauf Außenseite), Beutel-Flowpacks mit Flossensiegelnaht (Siegelung Innen- auf Innenseite oder Siegelung Außen- auf Außenseite), oder Beutel mit Kombinationen dieser Merkmale angesehen.

Die Erfindung betrifft auch ein Verfahren zur Herstellung einer Verbundfolie, wie im anhängenden Anspruch 12 definiert. Weitere erfindungsgemässe Verfahren sind in den abhängigen Ansprüchen definiert.

Verbundfolien der eingangs genannten Art aus mehreren miteinander verbundenen Kunststoff-, Metall- und/oder Papierlagen finden insbesondere in der Verpackungsindustrie zahlreiche Anwendungen. Zu flexiblen Verpackungslösungen, für deren Herstellung solche Verbundfolien verwendet werden, zählen beispielsweise herkömmliche Beutel, Standbeutel, FFS-Beutel, Flowrap-Verpackungssysteme und dergleichen.

Neuere Verpackungssysteme kombinieren Verbundfolien mit Verschlusselementen, wie etwa Ausgießern, Haft- und/oder Klettverschlüssen und/oder Zippersystemen.

Dabei werden hohe Anforderungen an die Verbundfolien gestellt, wie etwa eine erwünschte geringe Materialdicke und -dichte, ein vorteilhaftes Reißverhalten, eine hohe Reißfestigkeit, eine hohe Durchstoßfestigkeit, allgemein eine hohe mechanische Festigkeit bei geringer Materialdicke, eine vorteilhafte, je nach Anwendung geringe oder hohe Steifigkeit, ein definierter Wärmedurchgang bzw. ein gutes Isolierverhalten, gute Bersteigenschaften und ein hoher Platzdruck, ein gefälliges optisches Erscheinungsbild, vorteilhafte haptische Eigenschaften und/oder eine hohe Fälschungssicherheit. Weiters sind oftmals besondere Eigenschaften, wie etwa eine Lebensmittelverträglichkeit und/oder Säurebeständigkeit gefordert und schließlich sollen die Verbundfolien und die damit hergestellten Verpackungen umweltverträglich und unproblematisch zu entsorgen sein.

Viele dieser Ziele stehen zueinander im Widerspruch, sodass im Fachbereich ein ständiger Bedarf an neuen und vorteilhaften Verbundfolien und Verpackungssystemen besteht.

WO 2016/138967 A1 offenbart eine Verbundfolie für ein Deckelmaterial, wobei eine Barriereschicht, in welche gedehnte Dehnbereiche eingebracht sind, auf eine Trägerschicht aufkaschiert ist, und wobei die Verbundfolie auf der der Trägerschicht abgewandten Seite der Barriereschicht ein erhabenes Muster aufweist. Die Barriereschicht kann mit einer dünnen Überzugsschicht aus einem Heißsiegellack versehen sein, die vorzugsweise dünner ist als die Barriereschicht.

DE 69104981 T2 offenbart einen coextrudierten Schichtstoff mit einem elastomeren Kern, der beidseitig von einem Matrixwerkstoff umgeben ist. Der Kern weist Unregelmäßigkeiten in Form von Scheiteln und Rillen oder Falten auf.

Die gegenständliche Erfindung hat das Ziel, herkömmliche Verbundfolien zu verbessern und Verbundfolien zu schaffen, die sich hinsichtlich mehrerer der obengenannten Anforderungen optimieren lassen.

Diese und weitere Ziele werden erfindungsgemäß durch eine Verbundfolie der eingangs genannten Art erreicht, welche ein flächiges Muster von an die Normalbereiche angrenzenden Strukturbereichen aufweist, wobei die basisseitige Oberfläche und/oder die deckseitige Oberfläche der Mittelschicht in den Strukturbereichen eine aus den Toleranzfeldern herausführende Welligkeit aufweisen. Dadurch lässt sich bei geringer Materialdicke eine höhere mechanische Festigkeit erzielen.

Als "flächiges Muster" wird im Zusammenhang mit der gegenständlichen Offenbarung ein Muster bezeichnet, bei dem die abwechselnde Abfolge an Strukturbereichen und Normalbereichen sich im Wesentlichen über die gesamte Flächenerstreckung der Verbundfolie erstreckt, oder zumindest über jene Flächenerstreckung der Verbundfolie, in der die erfindungsgemäßen Vorteile und Effekte erzielt werden sollen.

Die Erfinder haben herausgefunden, dass eine verhältnismäßig dünne Mittelschicht ausreichen kann, um der Verbundfolie die gewünschten Eigenschaften zu verleihen. In vorteilhafter Weise kann daher das Verhältnis der Nenndicke der Basisschicht zur Nenndicke der Mittelschicht und/oder das Verhältnis der Nenndicke der Deckschicht zur Nenndicke der Mittelschicht größer als 2, vorzugsweise größer als 3 sein.

In einer vorteilhaften Ausgestaltung der Erfindung kann die Nenndicke der Basisschicht zwischen 20 % und 75 %, vorzugsweise zwischen 25 % und 40 % der Gesamtnenndicke der Verbundfolie betragen, die Nenndicke der Mittelschicht kann zwischen 5 % und 30 %, vorzugsweise zwischen 5 % und 15 % der Gesamtnenndicke der Verbundfolie betragen, und die Nenndicke der Deckschicht kann zwischen 20 % und 80 %, vorzugsweise zwischen 40 % und 70 % der Gesamtnenndicke der Verbundfolie betragen.

Die Gesamtnenndicke der Verbundfolie kann in vorteilhafter Weise zwischen 10 µm und 300 µm liegen und sie beträgt vorzugsweise zwischen 20 µm und 100 µm.

Die Gesamtdicke der Verbundfolie in den Strukturbereichen liegt vorzugsweise in einem Bereich zwischen 100 % und 150 % der Gesamtnenndicke der Verbundfolie, insbesondere zwischen 110 % und 130 %.

In einer vorteilhaften Ausführungsform der Erfindung sind die Strukturbereiche durch vor dem Verbinden der Mittelschicht mit der Basisschicht und der Deckschicht in die Mittelschicht eingebrachte gedehnte Bereiche gebildet. Dies erlaubt eine einfache und gut parametrisierbare Herstellung der Verbundfolie. Als "gedehnte Bereiche" werden im Zusammenhang mit der gegenständlichen Offenbarung insbesondere Flächenbereiche der Mittelschicht bezeichnet, die so weit gedehnt wurden, dass die Dicke- und/oder Oberflächentoleranzen in diesen Bereichen nicht eingehalten werden. Vorzugsweise beträgt das Verhältnis der Fläche der gedehnten Bereiche zur gesamten Flächenerstreckung der Verbundfolie zwischen 5 % und 70 %, insbesondere zwischen 20 % und 60 %.

In vorteilhafter Weise kann die Basisschicht eine an die basisseitige Oberfläche angrenzende Kaschierkleberschicht aufweisen und/oder die Deckschicht kann eine an die deckseitige Oberfläche angrenzende Kaschierkleberschicht aufweisen. Dies erlaubt die Verwendung zahlreicher bekannter und bewährter Klebersysteme.

Die Basisschicht kann in vorteilhafter Weise eine auf die Mittelschicht aufextrudierte Schicht sein, und/oder die Deckschicht kann eine auf die Mittelschicht aufextrudierte Schicht sein. Es ist auch möglich, Kaschierkleber und (Co-) Extrusionsverfahren zu kombinieren.

In erfindungsgemäß vorteilhaften Ausgestaltungen kann das Material der Basisschicht ausgewählt sein aus Papier, Metall, insbesondere Aluminium, Polyethylenterephthalat (PET), monoaxial oder biaxial orientiertem Polyethylenterephthalat (MOPET/BOPET), monoaxial, in Maschinenlaufrichtung oder biaxial orientiertem Polyethylen (OPE/BOPE/MDO PE), Polypropylen (PP), monoaxial oder biaxial orientiertem Polypropylen (MOPP/BOPP), Polyamid (PA), orientiertem Polyamid (OPA) und/oder Mischungen und/oder Schichtverbunden und/oder zumindest teilweise coextrudierten Schichtverbunden dieser Materialien.

Das Material der Deckschicht kann beispielsweise ausgewählt sein aus Metall, insbesondere Aluminium, Polyethylen (PE), monoaxial, in Maschinenlaufrichtung oder biaxial orientiertem Polyethylen (OPE/BOPE/MDO PE), Polypropylen (PP), monoaxial oder biaxial orientiertem Polypropylen (MOPP/BOPP), Polyethylenterephthalat (PET), Heißsiegellack (HSL) und/oder Mischungen und/oder Schichtverbunden und/oder zumindest teilweise coextrudierten Schichtverbunden dieser Materialien.

Das Material der Mittelschicht kann beispielsweise ausgewählt sein aus Polyethylen (PE), monoaxial, in Maschinenlaufrichtung oder biaxial orientiertem Polyethylen (OPE/BOPE/MDO PE), Polypropylen (PP), monoaxial oder biaxial orientiertem Polypropylen (MOPP/BOPP), Polyethylenterephthalat (PET), monoaxial oder biaxial orientiertem Polyethylenterephthalat (MOPET/BOPET), orientiertem Polyamid (OPA) und/oder Mischungen und/oder Schichtverbunden und/oder zumindest teilweise coextrudierten Schichtverbunden dieser Materialien. Durch eine gezielte Kombination dieser Grundmaterialien lassen sich die Eigenschaften der Verbundfolie spezifisch auf die jeweiligen Anforderungen hinsichtlich z.B. Festigkeit, Steifigkeit, Durchstoßfestigkeit, Berstverhalten, Platzdruck, Haptik, Wärmedurchgang bzw. Isolationsfähigkeit, Dichte, Dicke und/oder Wiederverwertbarkeit optimieren.

In einer vorteilhaften Ausführungsform können dabei die Basisschicht, die Mittelschicht und die Deckschicht zumindest im Wesentlichen aus dem selben Material bestehen, wobei das Material vorzugsweise ausgewählt sein kann aus monoaxial und/oder biaxial orientiertem Polyethylenterephthalat (MOPET/BOPET), Polyethylenterephthalat (PET), und monoaxial oder biaxial orientiertem Polypropylen (MOPP/BOPP). Dies erlaubt es, Monoverbunde mit Merkmalskombinationen herzustellen, die bislang nur mittels einer Kombination unterschiedlicher Materialien erreichbar waren. Monoverbunde sind insbesondere hinsichtlich der Wiederverwertbarkeit und Entsorgbarkeit vorteilhaft und erlauben die Erreichung und Einhaltung hoher Umweltstandards.

In vorteilhafter Weise kann die Deckschicht an ihrer der Mittelschicht abgewandten Deckfläche eine Siegellage aufweist. Unabhängig vom verwendeten Material kann die Deckschicht dadurch Siegelfähig gemacht werden, beispielsweise durch eine Beschichtung mit einem Heißsiegellack, durch Verwenden eines mehrschichtigen Folienmaterials mit einer äußeren Siegellage als Deckfläche, oder durch Aufextrudieren eines siegelfähigen Materials auf die Deckschicht.

In einer weiteren vorteilhaften Ausgestaltung der Erfindung können die Basisschicht und/oder die Deckschicht unabhängig voneinander als erfindungsgemäße Verbundfolie ausgebildet sein. Dadurch lassen sich vielschichtige Verbundfolien herstellen, die mit mehreren erfindungsgemäß ausgestalteten Mittelschichten versehen sind, wodurch sich beispielsweise die Isolationseigenschaften verbessern lassen. Alternativ können auch mehrere Mittelschichten unmittelbar aneinanderliegend angeordnet sein.

Die Erfindung betrifft weiters eine Beutelverpackung welche zumindest eine erfindungsgemäße Verbundfolie aufweist. Die Beutelverpackung kann auf herkömmliche Weise durch Versiegeln hergestellt werden und kann beispielsweise als einfacher, am Rand versiegelter Beutel, als Standbodenbeutel, als vorgefertigter Stehbeutel, als FFS-Pouch oder ähnliches hergestellt werden, wobei alle bekannten Herstellungsverfahren verwendet werden können.

In vorteilhafter Weise kann die Beutelverpackung ein Verschlusselement, wie etwa ein Zipperverschluss, Ausgießer und/oder ein formschlüssiges Verschlusselement, wie etwa ein Klett-, Klebe- oder Klemmverschluss aufweisen. Weiters können an der Beutelverpackung einfach und/oder wiederverschließbar öffenbare Öffnungseinrichtungen vorgesehen sein, wie etwa Sollbruchstellen, (Laser-)Schwächungsstellen, Einreißhilfen, wie etwa Kerbschnitte, Merkmale zur Beeinflussung der Rissausbreitung, wiederverschließbare Klebestellen, etc. Verschlusselemente und Öffnungseinrichtungen können auch in beliebiger Kombination vorgesehen werden.

Eine weitere vorteilhafte erfindungsgemäße Ausgestaltung kann vorsehen, dass zumindest eine Deckfläche der Verbundfolie zu der dem Beutelinhalt ausgesetzten Beutelinnenseite hin angeordnet ist. Dadurch lässt sich die Beutelinnenseite mit spezifischen Merkmalen ausstatten, beispielsweise einer besonderen Oberflächenstruktur, die die Entleerbarkeit des Beutels verbessert.

Das eingangs genannte erfindungsgemäße Verfahren ist dadurch gekennzeichnet, dass vor dem flächigen Verbinden der Mittelschicht mit der Basisschicht und mit der Deckschicht in die Mittelschicht Flächenüberschüsse eingebracht werden, und dass beim nachfolgenden flächigen Verbinden in der Verbundfolie Strukturbereiche ausgebildet werden, in denen die basisseitige Oberfläche und/oder die deckseitige Oberfläche der Mittelschicht eine größere Fläche aufweisen, als die entsprechenden, der Mittelschicht abgewendeten Außenflächen der Basisschicht und/oder der Deckschicht in dem entsprechenden Strukturbereichen. Die Flächenüberschüsse können beispielsweise durch eine abschnittsweise erhöhte Zuführungsgeschwindigkeit der Mittelschicht bewirkt werden, wobei sich die Mittelschicht aufgrund des Materialüberschusses beim Verbinden mit der Deckschicht bzw. Basisschicht sich in diesen Abschnitten wellt und gegebenenfalls in Falten legt.

Als "flächiges Verbinden" wird im Zusammenhang mit der gegenständlichen Beschreibung ein Verbinden von zwei Oberflächen bezeichnet, wobei zumindest eine der Oberflächen im Wesentlichen vollflächig an der anderen Oberfläche (bzw. einem auf diese Oberfläche aufgebrachten Kaschierkleber) anliegt. Die Bedingung "im Wesentlichen vollflächig" ist jedenfalls erfüllt, wenn die Oberfläche zu mehr als 70 %, vorzugsweise mehr als 80% und insbesondere mehr als 90% an der anderen Oberfläche anliegt.

In vorteilhafter Weise können die Flächenüberschüsse durch bereichsweises Dehnen der Mittelschicht in die Mittelschicht eingebracht werden. Als "bereichsweises Dehnen" wird im Zusammenhang mit der gegenständlichen Erfindung eine Dehnung in einem Flächenbereich der Mittelschicht bezeichnet, bei dem die an diesen Flächenbereich angrenzenden Flächen im Wesentlichen ungedehnt bleiben. Die Dehnung erfolgt dabei so stark, dass sie eine Abweichung von den Dicke- und/oder Oberflächentoleranzen der Mittelschicht bewirkt. Als "im Wesentlichen ungedehnt" wird die Mittelschicht in den Bereichen bezeichnet, in denen die Mittelschicht innerhalb dieser Toleranzen bleibt. Die Dehnung wird vorzugsweise ausreichend stark durchgeführt, um eine plastische, d.h. dauerhafte Verformung der Mittelschicht zu bewirken. Alternativ oder zusätzlich kann das Verbinden der Mittelschicht mit der Basisschicht und/oder der Deckschicht unmittelbar nach dem Einbringen der Dehnung erfolgen, sodass der Mittelschicht keine ausreichende Zeit verbleibt, um die ursprüngliche Form wieder anzunehmen. Dies kann insbesondere dann gewünscht sein, wenn gezielt Spannungszonen in die Verbundfolie eingebracht werden sollen.

Da bereichsweise Dehnen kann in vorteilhafter Weise mittels einer Positivprofilwalze und einer Negativprofilwalze mit korrespondierenden Profilen ausgeführt werden, zwischen denen die Mittelschicht hindurchgeführt wird. Dabei drücken auf der Profilwalze vorgesehene Vorsprünge die Mittelschicht in an der Negativprofilwalze vorgesehene Vertiefungen bzw. Nuten, wobei die Mittelschicht gedehnt wird, ohne sie zu durchtrennen. Das flächige Verbinden der Deckschicht mit der Mittelschicht erfolgt durch ein Verfahren, das ausgewählt ist aus Kaschieren und/oder einschichtigem Aufextrudieren und/oder mehrschichtigen Aufextrudieren.

In vorteilhafter Weise kann auch das flächige Verbinden der Basisschicht mit der Mittelschicht durch ein Verfahren erfolgen, das ausgewählt ist aus Kaschieren und/oder einschichtigem Aufextrudieren und/oder mehrschichtigen Aufextrudieren.

Erfindungsgemäß können die Parameter bei der Herstellung gezielt zur Bildung von Lufteinschlüssen in den Strukturbereichen ausgewählt werden. Die für den jeweiligen Zweck geeigneten Parameter können vom Fachmann durch standardmäßige Versuche ermittelt werden, wobei als Parameter beispielsweise die Art und das Ausmaß der Einbringung der Flächenüberschüsse bzw. Dehnungen, Anpressdrücke zwischen den Walzen, die verwendeten Kaschierkleber- bzw. Extrusionssysteme, die Verarbeitungstemperaturen, die Materialkombinationen, die Schichtdicken und insbesondere das Muster der eingebrachten Flächenüberschüsse bzw. Dehnbereiche optimiert werden können. Solche Lufteinschlüsse können die Isolationswirkung der Verbundfolie positiv beeinflussen, ohne dabei deren Gewicht zu erhöhen. Beim Versiegeln eine mit solchen Verbundfolien hergestellten Verbundfolie werden auch die Lufteinschlüsse im Bereich der Siegelung verschlossen, sodass bei der fertigen Beutelverpackung keine Verschmutzungen in die Lufteinschlüsse eindringen können. Weiters können die Lufteinschlüsse die Fälschungssicherheit der Verbundfolie (bzw. des damit verpackten Materials) erhöhen. Dazu werden die Lufteinschlüsse in Form eines nur schwer reproduzierbaren Musters in die Verbundfolie eingebracht, sodass sie wie ein "Wasserzeichen" wirken.

Die gegenständliche Erfindung wird nachfolgend unter Bezugnahme auf die Figuren 1 bis 17 näher erläutert, die beispielhaft, schematisch und nicht einschränkend vorteilhafte Ausgestaltungen der Erfindung zeigen. Dabei zeigt
Fig.1 und Fig. 2 je eine schematische Schnittansicht einer erfindungsgemäßen Verbundfolie;
Fig. 3 und Fig. 4 je eine schaubildliche schematisierte Darstellung der Mittelschicht einer erfindungsgemäßen Verbundfolie;
Fig. 5 eine weitere schematische Schnittansicht einer erfindungsgemäßen Verbundfolie;
Fig. 6 und 7 schaubildliche schematisierte Darstellungen unterschiedlicher Ausführungsformen erfindungsgemäßer Verbundfolien;
Fig. 8 bis 11 beispielhafte Oberflächenmuster, die sich erfindungsgemäß auf der Verbundfolie herstellen lassen;
Fig. 12 eine Schnittansicht eines vielschichtigen Aufbaus einer erfindungsgemäßen Verbundfolie;
Fig. 13 eine Schnittansicht einer erfindungsgemäßen Verbundfolie mit einer mehrlagigen Mittelschicht;
Fig. 14 eine schematische Darstellung einer Vorrichtung zur Herstellung einer erfindungsgemäßen Verbundfolie;
Fig. 15 eine Schnittansicht der Profilwalzen entlang ihrer Berührungslinie gemäß der Schnittlinie XIV-XIV in Fig. 14;
Fig. 16 eine Schnittansicht der Negativprofilwalze und der Anpresswalze entlang ihrer Berührungslinie gemäß der Schnittlinie XV-XV in Fig. 14; und
Fig. 17 eine schaubildliche Darstellung einer Beutelverpackung gemäß der Erfindung.

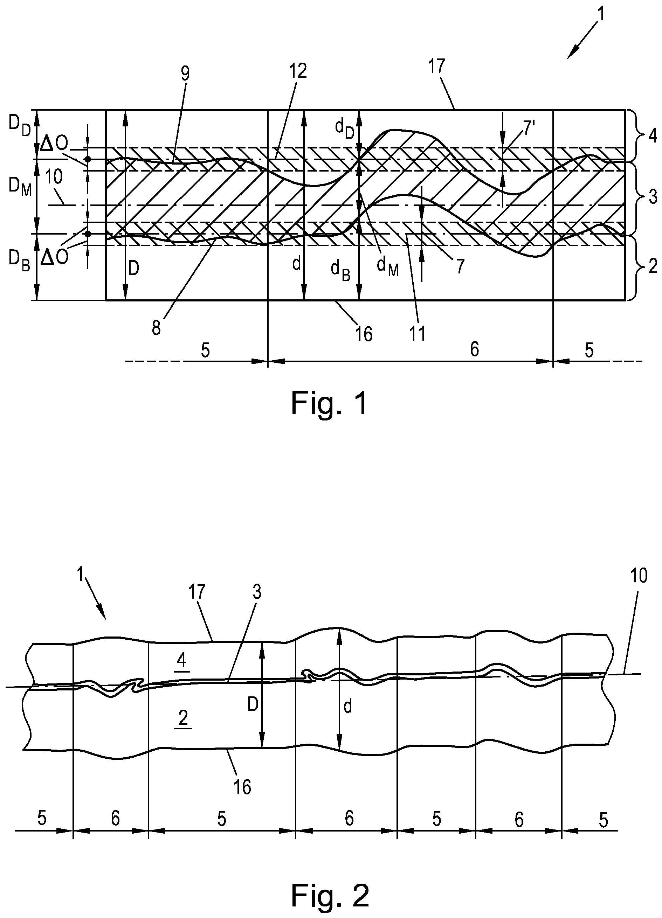

Fig. 1 zeigt eine schematische Schnittansicht einer erfindungsgemäßen Verbundfolie, wobei aus Gründen der Darstellbarkeit die Dicken und Längen der Folie und Folienelemente unabhängig voneinander stark verzerrt und keinesfalls maßstabsgetreu dargestellt sind.

Die in Fig. 1 dargestellte Verbundfolie 1 ist im Wesentlichen aus drei Schichten aufgebaut, die im Folgenden als Basisschicht 2, Mittelschicht 3 und Deckschicht 4 bezeichnet werden. Die in Fig. 1 obere Außenfläche der Verbundfolie auf Seiten der Deckschicht 4 wird im Zusammenhang mit der gegenständlichen Beschreibung als Deckfläche 17 bezeichnet und die gegenüberliegende Außenfläche wird im Folgenden als Basisfläche 16 bezeichnet. Es wird darauf hingewiesen, dass die Bezeichnungen Basis- und Deckfläche rein aus Gründen der Beschreibung gewählt sind, und dass mit diesen Bezeichnungen keine funktionellen Einschränkungen impliziert werden sollen, sofern solche nicht ausdrücklich beschrieben werden.

Die basisseitigen Oberfläche 8 der Mittelschicht 3 ist flächig mit der Basisschicht 2 verbunden und die deckseitigen Oberfläche 9 der Mittelschicht 3 ist flächig mit der Deckschicht 4 verbunden, wobei die Deckschicht 4 und die Basisschicht 2 beispielsweise mit einem Kaschierkleber auf die Mittelschicht laminiert, oder auf die Mittelschicht 3 aufextrudiert sein können. Dazu können die basisseitige und/oder die deckseitige Oberfläche mit bekannten Mitteln, wie etwa dem Auftragen einer Primerschicht, einer Koronarvorbehandlung oder Ähnlichem vorbehandelt sein. Auch können mehrere Schichten aufextrudiert werden, etwa um die Hafteigenschaften zu verbessern.

Die Basisschicht 2 weist eine Nenndicke D_{B} auf, die Mittelschicht 3 weist eine Nenndicke D_{M} auf und die Deckschicht 3 weist eine Nenndicke D_{D} auf, wobei als Nenndicke jeweils die durchschnittliche bzw. vom Hersteller angegebene Materialdicke des Ausgangsmaterials bzw. die beim Extrudieren eingestellte Solldicke bezeichnet wird. Die Gesamtnenndicke D der Verbundfolie ergibt sich durch die Summierung der einzelnen Nenndicken der Schichten. Für eine "idealisierte" Verbundfolie ergeben sich somit Soll-Grenzflächen 11, 12, die der Lage der Oberflächen 8, 9 der Mittelschicht 3 bei vollständig konstanten Materialdicken der Schichten entsprechen. Die Lage der Soll-Grenzflächen 11, 12 kann entweder auf eine der Oberflächen der Verbundfolie, auf eine der Grenzflächen zwischen den einzelnen Lagen, oder auf eine definierte Mittelebene der Verbundfolie oder einer der Schichten der Verbundfolie bezogen sein.

Herstellungsbedingt ergeben sich je nach Herstellungsverfahren für die tatsächliche Lage der basisseitigen Oberfläche 8 und der deckseitigen Oberfläche 9 Toleranzfelder 7, 7', in denen die Oberflächen 8, 9 der ordnungsgemäß hergestellten Verbundfolien angeordnet sind. Die Toleranzfelder 7, 7' werden als maximal zulässiger Toleranzabweichung ΔO von der jeweiligen Soll-Grenzfläche 11, 12 definiert. Solange die Oberflächen 8, 9 innerhalb ihrer Toleranzfelder 7, 7' verlaufen, können deren Welligkeiten praktisch vernachlässigt werden, sodass die Mittelschicht 3 und die Deckschicht 4, bzw. die Mittelschicht 3 und die Basisschicht 2 als "eben aneinanderliegend" angesehen werden können.

Die zulässigen Toleranzabweichungen ΔO können anhand von Lieferspezifikationen handelsüblicher Verbundfolien ermittelt werden. Beispielsweise wird in zahlreichen Lieferspezifikationen eine zulässige Toleranzabweichung ΔO von +/- 10% der Nenndicke verwendet. Bei dickeren Folienstärken (z.B. über 50 µm) können auch geringere Werte vorgesehen sein, z.B. eine zulässige Toleranzabweichung ΔO von +/- 8% der Nenndicke. Erfindungsgemäß weist die Verbundfolie 1 einerseits Normbereiche 5 auf, in denen die Basisschicht 2, die Mittelschicht 3 und die Deckschicht 4 eben aneinanderliegend miteinander verbunden sind, wobei die Verbundfolie 1 innerhalb dieser Normbereiche 5 einer "normalen" Verbundfolie entspricht, also einer Verbundfolie, die mit den selben Materiallagen hergestellt ist, wie die erfindungsgemäße Verbundfolie 1, die jedoch mit den bekannten Herstellungsverfahren für ebene Folien mit den im Stand der Technik erreichbaren Toleranzen hergestellt wird. (Die Toleranzabweichungen ΔO beziehen sich auf die im Stand der Technik üblichen und erreichbaren Toleranzen).

Andererseits weist die erfindungsgemäße Verbundfolie 1 jedoch auch Bereiche auf, in denen die Lage der basisseitigen Oberfläche 8 und/oder der deckseitigen Oberfläche 9 gezielt von den Toleranzfeldern 7 abweichend ausgebildet sind. Diese Bereiche werden im Zusammenhang mit der gegenständlichen Offenbarung als Strukturbereiche 6 bezeichnet. In den Strukturbereichen bilden die basisseitige Oberfläche 8 und/oder die deckseitige Oberfläche 9 die erfindungsgemäß aus den Toleranzfeldern 7 herausführende Welligkeit aus.

Die Strukturbereiche 6 können auf verschiedene Weise hergestellt werden, wobei allgemein vor dem Verbinden der Schichten, d.h. insbesondere vor dem Auflaminieren bzw. Aufextrudieren der Basisschicht 2 und der Deckschicht 4 auf die Mittelschicht 3 in die Mittelschicht "Flächenüberschüsse" eingebracht werden, d.h. dass die basisseitige Oberfläche 8 und/oder die deckseitige Oberfläche 9 in jedem Strukturbereich 6 eine größere Fläche aufweisen, als die entsprechende Basisfläche 16 bzw. Deckfläche 17 in den selben Strukturbereich 6. Im Gegensatz dazu stimmen diese Oberflächen innerhalb der Normbereiche 5 im Wesentlichen (d.h. innerhalb der üblichen Toleranzen) überein.

In von der Anmelderin durchgeführten Versuchen wurden für das Verhältnis der deckseitigen Oberfläche 9 (bzw. basisseitigen Oberfläche 8) der Mittelschicht 3 zur Deckfläche 17 (bzw. Basisfläche 16) der Verbundfolie in dem entsprechenden Strukturbereich 6 als vorteilhafte Werte Verhältnisse größer als 1,02, vorzugsweise größer als 1,1, insbesondere größer al 1,2 gefunden, wobei ein größeres Verhältnis die Welligkeit erhöht.

Die Flächenüberschüsse können beispielsweise erzeugt werden, indem bei der Herstellung eine Folie, die die Mittelschicht 3 bildet, innerhalb der Strukturbereiche 6 mit einer höheren Vorschubgeschwindigkeit zugeführt wird, sodass ein Materialüberschuss entsteht, der zu einer Welligkeit der Mittelschicht 3 führt. Dadurch lässt sich in den Strukturbereichen 6 ein Wellenmuster quer zur Vorschubrichtung erzeugen. In den Normbereichen 5 wird die Folie der Mittelschicht 3 in der "richtigen" Geschwindigkeit zugeführt, sodass in den Normbereichen 5 eine ebene Folie mit parallelen Schichtoberflächen erzeugt wird. Andererseits können die Flächenüberschüsse erzeugt werden, indem in die Folie, die die Mittelschicht 3 bildet, gedehnte Bereiche eingebracht werden, bevor die Folie der Mittelschicht 3 mit der Basisschicht 2 und der Deckschicht 4, die dieses gedehnten Bereiche nicht aufweisen, verbunden wird.

In den Strukturbereichen 6, in denen die Mittelschicht 4 wellig ausgebildet ist, weist die Mittelschicht 4 aufgrund der Dehnung und des teilweise schräg zur Folienebene 10 verlaufenden Richtung eine Dicke d_{M} auf, die sich von der Nenndicke D_{M} unterscheidet, wobei die tatsächliche Dicke d_{M} über den Strukturbereich 6 variieren kann. Die Welligkeiten der basisseitigen Oberfläche 8 bzw. der deckseitigen Oberfläche 9 werden großteils vom Kaschierkleber oder durch das im Extrusionsverfahren aufgebrachte Material der Basisschicht 2 bzw. Deckschicht 4 aufgefüllt, sodass auch die tatsächlichen Dicken d_{B} der Basisschicht 2 und die tatsächlichen Dicken d_{D} der Deckschicht 4 sich von deren Nenndicken D_{B}, D_{D} unterscheiden können. Auch die tatsächliche Gesamtdicke d, die sich aus einer Addition der tatsächlichen Dicken d_{B} der Basisschicht 2, der tatsächlichen Dicke d_{M} der Mittelschicht 2 und der tatsächlichen Dicken d_{D} der Deckschicht 4 ergibt, kann in den Strukturbereichen 6 von der Gesamtnenndicke D abweichen.

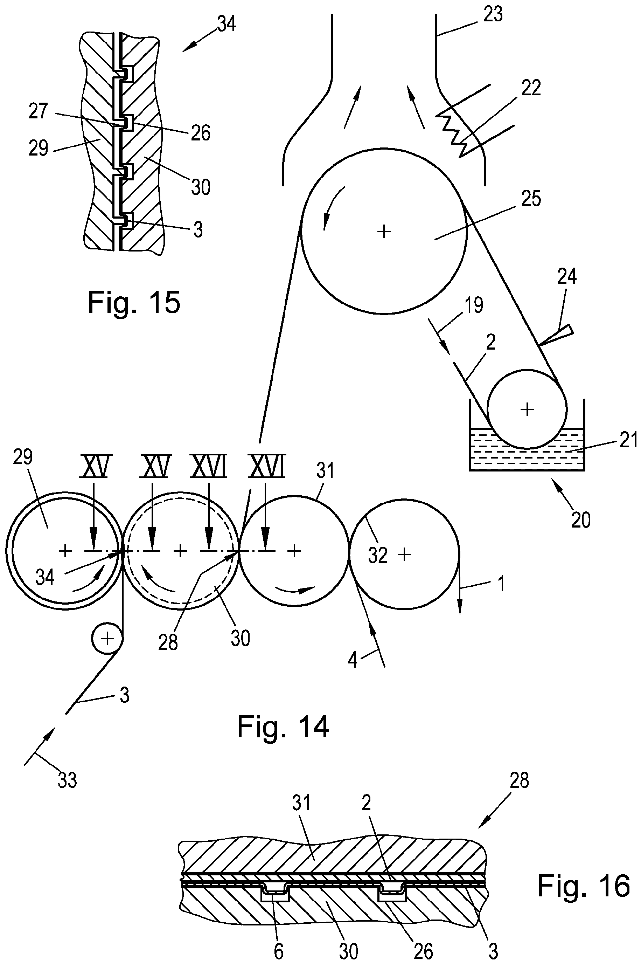

Fig. 14 zeigt eine beispielhafte Ausführungsform einer erfindungsgemäßen Vorrichtung zur Herstellung einer solchen Verbundfolie 1. Das Material, das die Basisschicht 2 der Verbundfolie 1 bildet, wird über eine Basismaterialzuführung 19 zugeführt, wobei die Basismaterialzuführung 19 in Fig. 14 schematisch als Pfeil dargestellt ist. Die Basisschicht 2 kann von einer Rolle abgerollt werden, oder auch direkt nach dem Bedrucken zugeführt werden, sodass die Vorrichtung als Inline-Element der Druckvorrichtung vorgesehen sein kann. Die Basisschicht 2 wird in einer Kaschierkleber-Aufbringung 20 auf einer Seite mit Kaschierkleber 21 überzogen, wobei die Kaschierkleberschicht mit einer Rakel 24 geebnet wird. Die mit dem Kaschierkleber 21 überzogene Basisschicht 2 wird dann über eine Trocknungswalze 25 geführt und getrocknet, wobei die ausdampfenden Lösungsmittel über eine Entlüftung 23 abgesaugt werden. Die Trocknungswalze 25 kann selbst beheizt sein, alternativ oder zusätzlich kann ein Heizelement 22 oder können weitere Heizelemente vorgesehen sein, um das Abbinden des Kaschierklebers 21 zu beschleunigen. Zur Trocknung können auch andere dem Fachmann bekannte Verfahren und Vorrichtungen verwendet werden, wie etwa eine Kanaltrocknung oder Jumbo-Trockner.

Ein Trocknen und Abbinden des Kaschierklebers 21 ist insbesondere für Trockenkaschierkleber notwendig, eine Vorbehandlung des auf die Basisschicht 2 aufgebrachten Kaschierklebers 21 vor dem Kaschieren kann jedoch auch bei anderen Kaschierklebertypen gewünscht oder erforderlich sein.

Die mit dem Kaschierkleber 21 überzogene Basisschicht 2 wird dann mit einer Folie für die Mittelschicht 3 zusammengeführt und in einer Presseinrichtung 28 aneinandergedrückt und miteinander verbunden, wobei die Presseinrichtung 28 Teil einer speziellen Walzenanordnung ist, die aus einer Positivprofilwalze 29, einer Negativprofilwalze 30, einer ersten Anpresswalze 31 und einer zweiten Anpresswalze 32 besteht, und die im Folgenden detaillierter beschrieben wird.

Die Folie der Mittelschicht 3 wird von einer Folienzuführung 33 der Walzenanordnung zugeführt und wird von der Negativprofilwalze 30 zu der Presseinrichtung 28 befördert, die von der gegen die Negativprofilwalze 30 drückenden Anpresswalze 31 gebildet wird. Die Folie der Mittelschicht 3 wird vorzugsweise bei Raumtemperatur zugeführt, wobei sie gegebenenfalls auch erwärmt oder gekühlt werden kann, um die Dehnungs- und Verformungseigenschaften zu beeinflussen. Eine Kühlung kann insbesondere dann vorgesehen sein, wenn die Mittelschicht 3 unmittelbar nach einem (co-)extrudieren der in Fig. 15 dargestellten Vorrichtung zugeführt wird. Bevor die Mittelschicht 3 zu der Presseinrichtung 28 gelangt, durchläuft sie noch ein Dehnorgan 34, das von den gegeneinander kämmenden Profilen der Negativprofilwalze 30 und der Positivprofilwalze 29 gebildet wird. Die kämmenden Profile der beiden Profilwalzen 29, 30 sind in der Schnittansicht der Fig. 15 dargestellt.

Die Negativprofilwalze 30 weist eine Reihe von umlaufenden Nuten 26 auf, und die Positivprofilwalze 29 weist entsprechende umlaufende Vorsprünge 27 auf, die jeweils in die Nuten 26 eingreifen. Zwischen den Profilen der Negativprofilwalze 30 und der Positivprofilwalze 29 besteht überall ein ausreichender Abstand, sodass die im Bereich des Dehnorgans 34 zwischen den Profilen der Profilwalzen 29, 30 eingespannte Folie der Mittelschicht 3 im Bereich jeder Nut der Negativprofilwalze 30 von dem entsprechenden Vorsprung 27 der Positivprofilwalze 29 zwar in die Nut hinein gedrückt und gedehnt, jedoch nicht beschädigt oder zerschnitten wird. Somit bildet sich in jeder Nut 26 ein längs zur zugeführten Mittelschicht 3 verlaufender, gedehnter Bereich aus, der in weiterer Folge einen Strukturbereich 6 definiert. Im Bereich zwischen den Nuten 26, wo die Mittelschicht 3 am äußeren Umfang der Negativprofilwalze 30 anliegt, wird das Material der Mittelschicht 3 nicht gedehnt, sondern nur von der Negativprofilwalze 30 weiter transportiert.

Die teilweise gedehnte Mittelschicht 3 wird von der Negativprofilwalze 30 um eine halbe Umdrehung mittransportiert und gelangt dann in die Presseinrichtung 28, die von der gegen die Negativprofilwalze 30 drückenden Anpresswalze 31 gebildet wird. In der Presseinrichtung 28 werden die mit dem Kaschierkleber 21 beschichtete Basisschicht 2 und die von der Negativprofilwalze 30 beförderte Mittelschicht 3 gegeneinander gepresst und die Mittelschicht 3 wird auf die Basisschicht 2 kaschiert.

Fig. 16 zeigt eine Schnittansicht durch die Presseinrichtung 28, also den Kontaktbereich zwischen Negativprofilwalze 30 und Anpresswalze 31.

Nach dem Kaschieren in der Presseinrichtung 28 legt sich das "überschüssige" Material des Strukturbereichs 6 der Mittelschicht 3 an das Material der Basisschicht 2 an, wobei es aufgrund des durch die Dehnung bewirkten Flächenüberschusses eine Welligkeit ausbildet. Nach dem Kaschieren der Mittelschicht 3 auf die Basisschicht 2 wird die Deckschicht 4 auf die freie Oberfläche der Mittelschicht 3 aufgebracht, wobei die Deckschicht 4 beispielsweise in der selben Walzenanordnung zwischen der ersten Anpresswalze 31 und der zweiten Anpresswalze 32 auf die Mittelschicht 3 kaschiert werden kann. Die Deckschicht 4 kann dabei in ähnlicher Weise wie die Basisschicht 2 mit einem Kaschierkleber beschichtet werden, was der Übersichtlichkeit halber in Fig. 14 nicht dargestellt ist.

Alternativ kann die Deckschicht 4 in einem späteren Arbeitsschritt aufgebracht werden, oder die Deckschicht 4 kann mittels einer Extrusionsbeschichtung auf die Mittelschicht 4 aufgebracht werden. Auch kann bereits die Basisschicht 2 mittels eines Extruders auf die in dem Dehnorgan 34 vorgedehnte Mittelschicht 4 aufgebracht werden.

Die Ausbildung der Welligkeit der Mittelschicht 3 lässt sich insbesondere über die Relativposition zwischen der Negativprofilwalze 30 und der Positivprofilwalze 29, die das Ausmaß der Dehnung steuert, die Ausbildung der Profile dieser Profilwalzen 29, 30 und den Anpressdruck der Presseinrichtung beeinflussen und steuern. In den Fig. 14 bis 16 ist eine Negativprofilwalze 30 mit in Umdrehungsrichtung entlang des Umfangs der Walze verlaufenden Nuten 26 und dementsprechenden in Umdrehungsrichtung um den Umfang der Positivprofilwalze 29 verlaufenden Vorsprüngen, die in die Nuten 26 der Negativprofilwalze 30 eingreifen, dargestellt. Dies führt zu Strukturbereichen 6, die längs zur Transportrichtung der Verbundfolie 1 verlaufen. Mit alternativen Walzenprofilen können jedoch auch zahlreiche andere Muster hergestellt werden, beispielsweise können die Profile quer zur Vorschubrichtung (und parallel zur Achse der Walzen) verlaufende Nuten bzw. Vorsprünge aufweisen, oder die Nuten bzw. Vorsprünge können schräg zur Umdrehungsrichtung verlaufend angeordnet sein. Die Nuten und/oder Vorsprünge können regelmäßig oder unregelmäßig angeordnete Unterbrechungen aufweisen, und/oder es können Nuten bzw. Vorsprünge realisiert werden, die nicht parallel zueinander angeordnet sind, bzw. deren Verlauf sich gegebenenfalls auch überschneiden kann, etwa in Form eines karierten Musters oder Waffelmusters.

Unter den Welligkeiten der Mittelschicht 3 können auf beiden Seiten Hohlräume verbleiben, die auch entlang der Strukturbereiche 6 verlaufende Kanülen ausbilden können. Dies kann insbesondere dann der Fall sein, wenn die basisseitige bzw. decksseitige Oberfläche 8, 9 Bereiche aufweist, in denen die Welligkeiten Faltungen aufweist. Diese Kanülen stellen bei der Verwendung der Verbundfolie 1 als Verpackungsmaterial im Allgemeinen kein Problem dar, da die Verbundfolie 1 am Randbereich der Verpackung beim Versiegeln unter Aufbringung eines Siegeldruck und einer Siegeltemperatur zusammengedrückt und dadurch abgedichtet wird. Es ist daher im Allgemeinen nicht erforderlich, die Bildung solcher unter den Faltungen verbleibenden Hohlräume zu verhindern.

Fig. 2 zeigt einen weiteren Querschnitt durch eine erfindungsgemäße Verbundfolie 1, wobei auch hier die Dicken und Längen der Folie und Folienelemente unabhängig voneinander stark verzerrt und keinesfalls maßstabsgetreu dargestellt sind. Die Verbundfolie 1 der Fig. 2 zeigt mehrere abwechselnd aneinander angrenzende Normbereiche 5 und Strukturbereiche 6, wobei erkennbar ist, dass die tatsächliche Gesamtdicke d der Verbundfolie 1 sich in den Strukturbereichen 6 von der Gesamtnenndicke D unterscheiden kann, wobei die Verbundfolie 1 im Strukturbereich 6, in dem die Mittelschicht 3 Wellungen aufweist, im Allgemeinen dicker ist, als in den Normbereichen 5 (wo die Gesamtdicke d im Wesentlichen der Gesamtnenndicke D entspricht). Diese Verdickungen der Strukturbereiche 6 sind auch bei opaken Verbundfolien an den Oberflächen 16, 17 der Verbundfolie 1 sichtbar und haptisch fühlbar und können somit einerseits als zusätzliche Designelemente verwendet werden und andererseits die Oberflächeneigenschaften, wie etwa die Haftneigung der Oberfläche, beeinflussen.

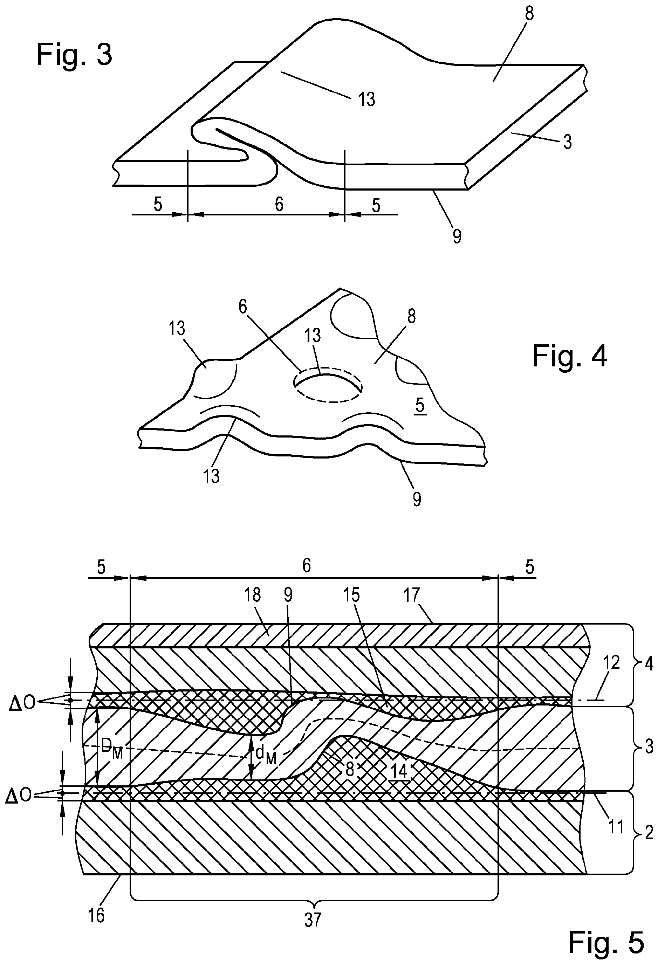

Fig. 3 und 4 zeigen zwei beispielhafte Welligkeitsmuster, die in die Mittelschicht 3 eingebracht werden können, wobei in Fig. 3 und 4 die Mittelschicht 3 jeweils alleine ohne die angrenzende Basisschicht und die angrenzende Deckschicht dargestellt ist.

Fig. 3 zeigt eine Mittelschicht 3, in die im Strukturbereich 6 eine starke, linear verlaufende Dehnung eingebracht wurde, die sich zu einer Faltung 13 wellt, wobei die basisseitige Oberfläche 8 (und auch die deckseitige Oberfläche 9) im Bereich der Faltung 13 an sich selbst anliegt.

In Fig. 4 zeigt die Mittelschicht 3 ein Wellenmuster, bei dem die Mittelschicht 3 in den im wesentlichen runden Strukturbereichen 6 ausgebeult ist und hügelartige Erhebungen ausbildet. Solche runde Strukturbereiche 6 können beispielsweise mithilfe eines Walzenpaars hergestellt werden, bei dem die Negativprofilwalze keine Nuten aufweist, sondern kreisrunde Vertiefungen, in die noppenartig ausgebildete Vorsprünge bzw. Prägezapfen der Positivprofilwalze eingreifen. Der Durchmesser der kreisrunden Vertiefungen ist dabei größer als der Durchmesser der Prägezapfen, sodass die zwischen dem Walzenpaar eingespannte Folie zwar in die Vertiefungen hinein gedehnt wird, aber am Rand der Vertiefung ausreichend Platz bleibt, damit die die Mittelschicht 3 ausbildende Folie nicht am Rand der Vertiefungen abgeschert wird bzw. einreißt. Die Prägezapfen können beispielsweise zylinderförmig sein, wobei die Stirnfläche nach außen hin bombiert sein kann. Gegebenenfalls können die Prägezapfen auch halbkugelförmig oder als Halb-Ellipsoid ausgeführt sein.

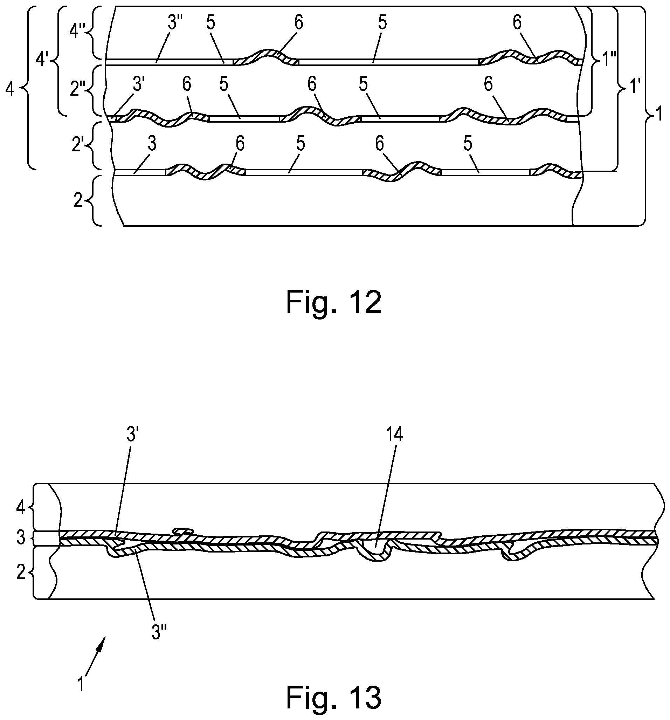

Fig. 5 zeigt, wiederum nicht maßstabstreu, eine Schnittansicht durch eine Verbundfolie 1, bei der die Basisschicht 2 eine an der basisseitigen Oberfläche 8 der Mittelschicht 3 angrenzende Kaschierkleberschicht 14 aufweist und die Deckschicht 14 eine an der deckseitigen Oberfläche 9 der Mittelschicht 3 angrenzende Kaschierkleberschicht 15 aufweist, wobei diese Verbundfolie beispielsweise durch das zuvor unter Bezugnahme auf die Fig. 13 bis 15 beschriebene Verfahren hergestellt werden kann. Die Welligkeiten der Mittelschicht 3 im Strukturbereich 6 werden beim Kaschieren ganz oder teilweise durch Kaschierkleber aufgefüllt. Die Deckschicht 4 weist an ihrer Deckfläche 17 eine Siegellage 18 auf, mit der die Verbundfolie 1 zur Bildung einer Verpackung gegen eine weitere Verbundfolie oder gegen ein anderes Element der Verpackung gesiegelt werden kann. Alternativ kann die gesamte Deckschicht 4 (abgesehen von der Kaschierkleberschicht 15) aus einem siegelfähigem Material bestehen.

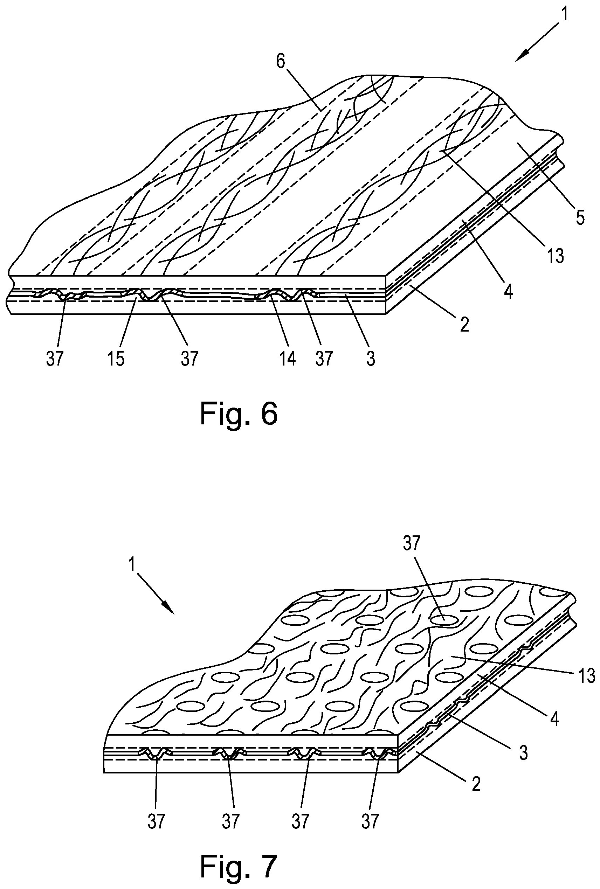

In Fig. 6 ist eine Verbundfolie 1 schematisch dargestellt, wobei sowohl der Querschnitt, als auch die Oberflächenstruktur dargestellt sind. Die Größenverhältnisse sind wiederum nicht maßstabsgetreu, um sowohl die verhältnismäßig kleinen Dimensionen des Querschnitts (die im Allgemeinen im Mikrometerbereich liegen und mit freiem Auge nicht sichtbar sind), als auch das durch die gedehnten Bereiche der Mittelschicht 2 erzeugte Muster an Wellen und Faltungen 13 (die im Allgemeinen mit freiem Auge sichtbar sind) in einer Figur darstellen zu können.

Zur Herstellung der in Fig. 6 dargestellten Verbundfolie 1 wurden, wie oben beschrieben, mehrere parallel zueinander verlaufende gedehnte Bereiche 37 in die Folie der Mittelschicht 2 eingebracht, bevor diese mit der Basisschicht 2 und der Deckschicht 4 laminiert wurde. Aufgrund der gedehnten Bereichen 37 bilden sich beim Laminieren mehrere parallel zueinander verlaufende Strukturbereiche 6 aus, in denen das Wellenmuster entsteht. Die Strukturbereiche 6 sind durch Normbereiche 5 voneinander getrennt, in denen die Verbundfolie 1 den üblichen Herstellungstoleranzen entspricht. Das Muster an Wellen und Faltungen 13 ist im Allgemeinen (bei transparenten Folien) mit freiem Auge sichtbar und haptisch fühlbar. Im dargestellten Fall ist das Muster, das durch die gedehnten Bereiche 37 entsteht, nicht eindeutig definiert, sondern die Faltungen 13 bzw. Wellen bilden sich im Wesentlichen zufällig, wobei die Struktur des Musters durch mehrere Parameter beeinflusst werden kann. Beispiele solcher Parameter sind das Ausmaß der Dehnung (also insbesondere die Art und die Zustellung der Profilwalzen), die Bearbeitungsgeschwindigkeit und das Material/die Materialdicke der einzelnen Schichten. Auch die Verarbeitungstemperaturen und das jeweilige Verarbeitungsverfahren (z.B. Nass-/ Trockenkaschieren und/oder (Co-) Extrudieren) sind Parameter des Herstellungsverfahrens. Durch eine sorgfältige Parametrierung können jedoch auch regelmäßigere Muster erstellt werden, beispielsweise in Form von wohldefinierten, parallel zueinander verlaufenden Wellen bzw. Faltungen.

Der Fachmann ist in der Lage, anhand der hierin angeführten Lehren und durch übliche Versuche die Parameter so einzustellen, dass unter den jeweiligen Material- und Maschinenbedingungen ein vorteilhaftes und gewünschtes Muster entsteht.

Die in Fig. 6 dargestellten Strukturbereiche 6 verlaufen im Wesentlichen parallel zu den gedehnten Bereichen 37 der Mittelschicht 3, die beiden Bereiche stimmen jedoch nicht notwendiger Weise exakt miteinander überein. Insbesondere können sich, etwa bei einer schnelleren Verarbeitungsgeschwindigkeit und/oder einer starken bereichsweisen Dehnung, Wellen oder Faltungen 13 bilden, die sich in die Bereiche außerhalb des gedehnten Bereichs erstrecken. Dies kann erfindungsgemäß ausgenutzt werden, um gezielt in der Verbundfolie 1 Muster an Wellen und/oder Faltungen 13 zu schaffen, deren Anordnung sich von dem Muster der in die Mittelschicht 2 eingebrachten Muster an gedehnten Bereichen 37 erheblich unterscheiden können.

Fig. 7 zeigt eine solche Verbundfolie 1, bei der die gedehnten Bereiche 37 ein Muster erzeugen, das starke Zufallselemente aufweist, wobei sich die von den gedehnten Bereichen 37 bewirkten Wellen und Faltungen 13 auch in die Bereiche außerhalb der gedehnten Bereiche erstrecken. Die gedehnten Bereiche 37 der Fig. 7 bilden im Wesentlichen ein regelmäßiges Muster an kreisförmigen gedehnten Bereichen 37, die beispielsweise durch eine Walzenanordnung in die Folie der Mittelschicht 3 eingebracht werden können, bei der eine Positivprofilwalze noppen-, zapfen bzw. zylinderförmige Vorsprünge aufweist, die in zylindrische Vertiefungen eingreifen, die in einer Negativprofilwalze vorgesehen sind. Die von dieser Walzenanordnung teilweise gedehnte Folie entspricht im Wesentlichen der in Fig. 4 dargestellten Folie der Mittelschicht 3.

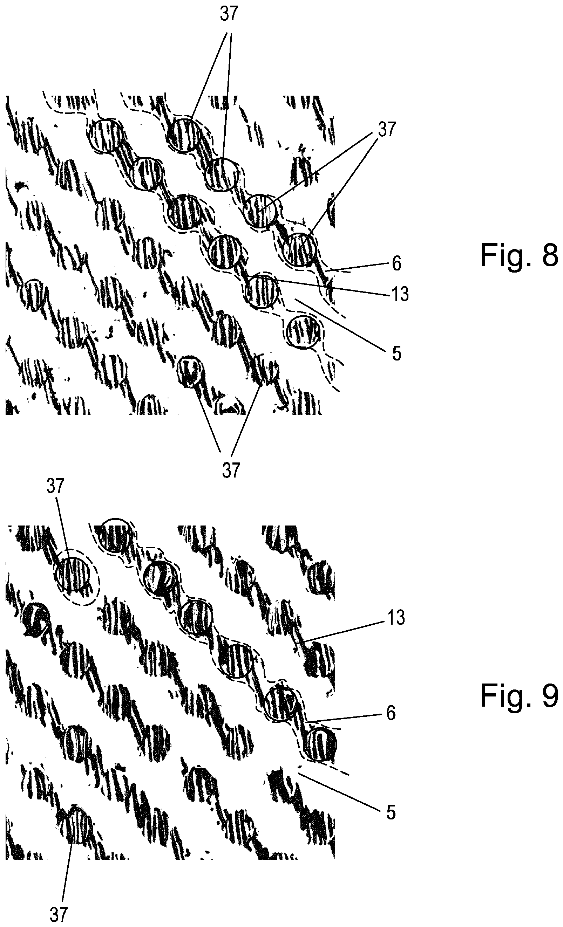

Bei Versuchen hat sich herausgestellt, dass das Muster an Strukturbereichen 6, das mit dieser Walzenanordnung hergestellt werden kann, durch eine gezielte Parameterauswahl beeinflusst werden kann. In den Fig. 8 bis 11 sind unterschiedliche Muster von Strukturbereichen 6 dargestellt, die vom Anmelder unter Verwendung derselben Vorrichtung und derselben Materialien (für die Basisschicht 2, die Deckschicht 4, die Mittelschicht 3 und die Kaschierkleber) hergestellt werden konnten, indem lediglich die Zustellung des Walzenpaars aus Positivprofilwalze und Negativprofilwalze verändert wurde.

In Fig. 8 ist das Ergebnis einer ersten Versuchsreihe dargestellt, bei der die Mittelschicht 2 in den kreisförmigen gedehnten Bereichen 37 nur geringfügig gedehnt wurde. Es bildete sich innerhalb der kreisförmigen gedehnten Bereiche 37 ein Muster an Wellen und Faltungen 13 aus, das sich darüber hinaus im Wesentlichen diagonal von einem gedehnten Bereich 37 zum nächsten gedehnten Bereich 37 erstreckte. Dadurch wurde ein im Wesentlichen lineares, diagonales Muster an Strukturbereichen 6 und Normbereichen 5 geschaffen.

Das in Fig. 9 dargestellte Muster wurde erzielt, indem die Zustellung des Walzenpaars erhöht wurde, sodass die Zapfen der Positivprofilwalze tiefer in die Vertiefungen der Negativprofilwalze eindrangen, und die Folie der Mittelschicht dadurch stärker gedehnt wurde. Wie in Fig. 9 zu erkennen ist, wurden die Wellen und Faltungen 13 verstärkt, wobei weiterhin ein im Wesentlichen regelmäßiger, diagonaler Verlauf an Strukturbereichen 6 und Normbereichen 5 erzielt wurde.

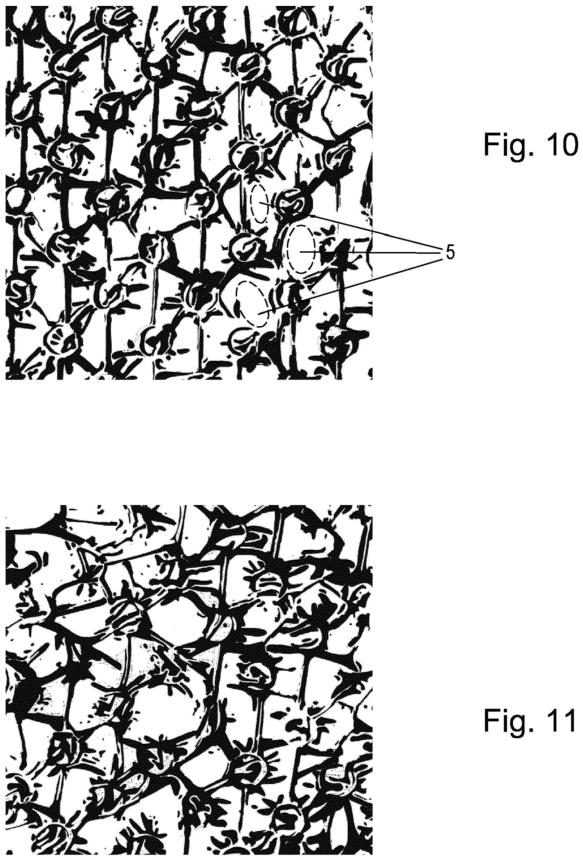

Bei einer noch stärkeren Dehnen (d.h. engeren Zustellung des Walzenpaars) veränderte sich das Muster und zeigte nicht mehr die diagonalen Streifen an Strukturbereichen 6. Vielmehr bildete sich eine in Fig. 10 dargestellte netzartige Struktur an Wellen und Faltungen 13, die sich von den einzelnen gedehnten Bereichen 37 zu benachbarten gedehnten Bereichen erstreckte und eine starken Zufallscharakter aufwiesen. Die Normbereiche 5 sind dabei auf einzelne abgeschlossene Flächenbereiche begrenzt, die sich zwischen den durch das Netzmuster gebildeten Strukturbereichen 6 erstrecken.

Eine weitere Erhöhung der Dehnung führte zu einer noch gröberen Netzstruktur, wie sie in Fig. 11 dargestellt ist. Dabei ist das regelmäßige Muster an gedehnten Bereichen 37 nur mehr schemenhaft zu erkennen.

Die in Fig. 8 bis 11 dargestellten Versuchsergebnisse zeigen, dass sich mit derselben Anlage lediglich durch Verändern eines einzigen Parameters unterschiedliche Muster herstellen lassen. Dies verdeutlicht den großen Anwendungsbereich der Erfindung, da auch die anderen Parameter, insbesondere die Auswahl der verwendeten Materialien, deren Streckeigenschaften und Schichtstärken, gezielt verändert werden können, um ein bestimmtes Muster zu erzeugen. Auch die Form und Anordnung der gedehnten Bereiche 37 kann je nach Bedarf gewählt werden.

Die an der Verbundfolie 1 sichtbare Überlagerung an gedehnten Bereichen 37 und eines Musters an Wellen und Faltungen 13, dass nur teilweise diesen gedehnten Bereichen 37 entspricht, erlaubt beispielsweise die Erzielung kombinierter Effekte, etwa das Einbringen eines wiedererkennbaren Musters an gedehnten Bereichen 37 (z.B. in Form eines Firmenlogos, einer Marke, eines Ursprungshinweises oder eines sonstigen Zeichens) und dem Erzeugen eines flächigen Netzmusters, das beispielsweise die Haptik, die Festigkeit und/oder die Isolationseigenschaften der Verbundfolie 1 positiv beeinflusst.

Sobald ein bestimmtes Muster, das mit einer bestimmten Materialkombination, einer bestimmten Maschine und besonderen Parametern erzeugt werden kann, einmal definiert wurde, lässt es sich zuverlässig und wiederholbar erzeugen. Da jedoch großindustrielle Vorrichtungen für die Herstellung derartiger Verbundfolien in nur in spezialisierten Produktionsstätten vorhanden und daher nicht frei verfügbar sind, und da für die Herstellung allgemein ein erhebliches Fachwissen und eine herstellungsspezifische Erfahrung erforderlich sind, kann es für Dritte schwierig sein, dasselbe Produkt nachzuarbeiten, etwa um es zu kopieren. Dadurch lassen sich verhältnismäßig kostengünstige Verbundfolien herstellen, die ein sehr hohes Maß an Fälschungssicherheit aufweisen. Ein aus der Verbundfolie 1 hergestelltes Verpackungsmaterial kann daher zur Verhinderung von Produktpiraterie mit einem fälschungssicheren Herkunftshinweis versehen werden.

Fig. 12 zeigt eine weitere vorteilhafte Ausführungsform einer erfindungsgemäßen Verbundfolie 1, bei der mehrere (im dargestellten Fall drei) Mittelschichten 3, 3', 3" vorgesehen sind, die jeweils ein flächiges Muster an Normalbereichen (5) und Strukturbereichen (6) aufweist.

Diese Verbundfolie 1 der Fig. 12 entspricht im Wesentlichen einer kaskadierenden Kombination mehrerer erfindungsgemäßer Verbundfolien 1, 1', 1": Die Verbundfolie 1 weist eine Basisschicht 2, eine Mittelschicht 3 und eine Deckschicht 4 auf, wobei die Deckschicht 4 wiederum als erfindungsgemäße Verbundfolie 1' ausgebildet ist, die aus einer Basisschicht 2', einer Mittelschicht 3' und einer Deckschicht 4' besteht. Auch die Deckschicht 4' ist als erfindungsgemäße Verbundfolie 1" ausgebildet und weist eine Basisschicht 2", eine Mittelschicht 3" und eine Deckschicht 4" auf.

Dadurch lassen sich Verbundfolien mit zwei, drei oder mehr Mittelschichten 3, 3', 3" gestalten, wobei jede Mittelschicht ein eigenes Muster an Normbereichen 5 und Strukturbereichen 6 aufweisen kann. Dies erlaubt einerseits eine gezielte Überlagerung mehrerer Muster, andererseits können dadurch Verbundfolien 1 mit besonderen Eigenschaften hergestellt werden, beispielsweise besonders reißfeste Verbundfolien, Verbundfolien mit einer erhöhten Durchstoßfestigkeit oder Verbundfolien, die eine hohe Wärmeisolierung bieten. Durch eine gezielte Auswahl unterschiedlicher Materialkombinationen für die unterschiedlichen Schichten lassen sich unterschiedliche Einzelmerkmale bestimmter Schichten vorteilhaft miteinander kombinieren.

Fig. 13 zeigt eine weitere Ausführungsform der erfindungsgemäßen Verbundfolie, bei der die Mittelschicht 3 aus zwei Mittelschichtfolien 3', 3" gebildet ist, in die unabhängig voneinander gedehnte Bereiche eingebracht wurden, und die dann mit einer Kaschierkleberschicht miteinander verbunden wurden. Die Basisschicht 2 und die Deckschicht 4 wurden jeweils auf eine Seite der Mittelschicht 3 auf diese aufextrudiert.

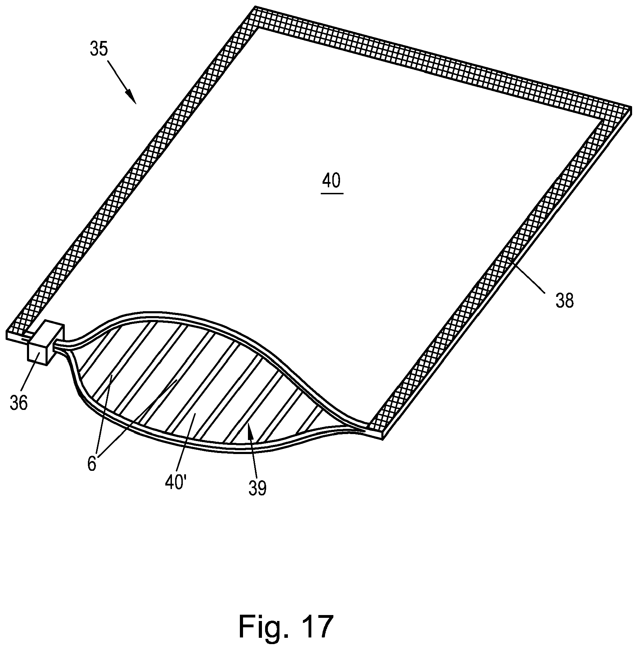

Fig. 17 zeigt eine schaubildliche Darstellung einer erfindungsgemäßen Beutelverpackung 35, die unter Verwendung einer vorstehend beschriebenen Verbundfolie 1 hergestellt werden kann. Die Beutelverpackung 35 weist zwei im Wesentlichen rechteckige Seitenlagen 40, 40' auf, die jeweils aus der erfindungsgemäßen Verbundfolie 1 hergestellt sind, und die an einer Siegelfläche 38 an drei Rändern miteinander versiegelt sind. Der vierte Rand ist unversiegelt und bildet eine Öffnung 39 aus. Die Öffnung 39 kann mittels eines Verschlusselements 36 in der Art eines Zippverschlusses verschlossen werden.

Die Verbundfolie 1 weist parallele, geradlinige Strukturbereiche 6 auf, die in den Seitenlagen 40, 41 parallel zu den Seitenrändern der Beutelverpackung, das heißt quer zur Öffnung 39, angeordnet sind. Die parallelen Strukturbereiche 6 bilden dadurch an der Beutelinnenseite eine rinnenartige Struktur aus, die das Ausgießverhalten des Beutels verbessert und ein Anhaften des Beutelinhalts an den Beutelwandungen verhindert.

Mit der erfindungsgemäßen Verbundfolie 1 lassen sich zahlreiche Beutelformen herstellen, etwa Standbodenbeuteil, FFS-Pouches oder Flowrap-Beutel. Die Beutel können je nach Verwendungsform mit weiteren Beutelelementen kombiniert werden, beispielsweise Spouts bzw. Ausgießer, Klemm-, Klett- und oder Klebeverschlusslösungen, etc.

Die erfindungsgemäße Verbundfolie 1 kann auch genutzt werden, um das Verhalten einer Rissausbreitung zu beeinflussen, etwa indem eine Rissausbreitung entlang der Strukturbereiche 6 begünstigt wird und/oder indem eine Rissausbreitung quer zu Strukturbereichen 6 verhindert wird.

### Ausführungsbeispiele

Unterschiedliche Materialkombinationen der einzelnen Schichten, sowie spezifische Eigenschaften dieser Materialkombinaionen sind in den untenstehenden Tabellen 1 und 2 bespielhaft dargestellt. Tabelle 1 offenbart Beispiele spezifischer Materialkombinationen mit unterschiedlichen Materialien, Tabelle 2 offenbart Ausführungsformen als Monoverbund. Die in den Tabellen angeführten Schrägstriche repräsentieren jeweils und/oder-Kombinationen.

**Tabelle 1:**

| **Basisschicht 2** | **Mittelschicht 3** | **Deckschicht 4** |
|---|---|---|
| PET/BOPET/MOPET | PE/MDO PE / BO PE | PE/MDO PE / BO PE |
| PET/BOPET/MOPET | PE/MDO PE / BO PE | PP/BOPP/MOPP |
| PET/BOPET/MOPET | PE/MDO PE / BO PE | PET/BOPET/MOPET |
| PET/BOPET/MOPET | PE/MDO PE / BO PE | PA/OPA |
| PET/BOPET/MOPET | PE/MDO PE / BO PE | Alu |
| PET/BOPET/MOPET | PE/MDO PE / BO PE | Coex PE |
| PET/BOPET/MOPET | PE/MDO PE / BO PE | Coex PP |
| PET/BOPET/MOPET | PP/BOPP/MOPP | PE/MDO PE / BO PE |
| PET/BOPET/MOPET | PP/BOPP/MOPP | PP/BOPP/MOPP |
| PET/BOPET/MOPET | PP/BOPP/MOPP | PET/BOPET/MOPET |
| PET/BOPET/MOPET | PP/BOPP/MOPP | PA/OPA |
| PET/BOPET/MOPET | PP/BOPP/MOPP | Alu |
| PET/BOPET/MOPET | PP/BOPP/MOPP | Coex PE |
| PET/BOPET/MOPET | PP/BOPP/MOPP | Coex PP |
| PET/BOPET/MOPET | PET/BOPET/MOPET | PE/MDO PE / BO PE |
| PET/BOPET/MOPET | PET/BOPET/MOPET | PP/BOPP/MOPP |
| PET/BOPET/MOPET | PET/BOPET/MOPET | PA/OPA |
| PET/BOPET/MOPET | PET/BOPET/MOPET | Alu |
| PET/BOPET/MOPET | PET/BOPET/MOPET | Coex PE |
| PET/BOPET/MOPET | PET/BOPET/MOPET | Coex PP |
| PET/BOPET/MOPET | PA/OPA | PE/MDO PE / BO PE |
| PET/BOPET/MOPET | PA/OPA | PP/BOPP/MOPP |
| PET/BOPET/MOPET | PA/OPA | PET/BOPET/MOPET |
| PET/BOPET/MOPET | PA/OPA | PA/OPA |
| PET/BOPET/MOPET | PA/OPA | Alu |
| PET/BOPET/MOPET | PA/OPA | Coex PE |
| PET/BOPET/MOPET | PA/OPA | Coex PP |
| PET/BOPET/MOPET | Alu | PE/MDO PE / BO PE |
| PET/BOPET/MOPET | Alu | PP/BOPP/MOPP |
| PET/BOPET/MOPET | Alu | PET/BOPET/MOPET |
| PET/BOPET/MOPET | Alu | PA/OPA |
| PET/BOPET/MOPET | Alu | Alu |
| PET/BOPET/MOPET | Alu | Coex PE |
| PET/BOPET/MOPET | Alu | Coex PP |
| PP/BOPP/MOPP | PE/MDO PE / BO PE | PE/MDO PE / BO PE |
| PP/BOPP/MOPP | PE/MDO PE / BO PE | PP/BOPP/MOPP |
| PP/BOPP/MOPP | PE/MDO PE / BO PE | PET/BOPET/MOPET |
| PP/BOPP/MOPP | PE/MDO PE / BO PE | PA/OPA |
| PP/BOPP/MOPP | PE/MDO PE / BO PE | Alu |
| PP/BOPP/MOPP | PE/MDO PE / BO PE | Coex PE |
| PP/BOPP/MOPP | PE/MDO PE / BO PE | Coex PP |
| PP/BOPP/MOPP | PP/BOPP/MOPP | PE/MDO PE / BO PE |
| PP/BOPP/MOPP | PP/BOPP/MOPP | PET/BOPET/MOPET |
| PP/BOPP/MOPP | PP/BOPP/MOPP | PA/OPA |
| PP/BOPP/MOPP | PP/BOPP/MOPP | Alu |
| PP/BOPP/MOPP | PP/BOPP/MOPP | Coex PE |
| PP/BOPP/MOPP | PET/BOPET/MOPET | PE/MDO PE / BO PE |
| PP/BOPP/MOPP | PET/BOPET/MOPET | PP/BOPP/MOPP |
| PP/BOPP/MOPP | PET/BOPET/MOPET | PET/BOPET/MOPET |
| PP/BOPP/MOPP | PET/BOPET/MOPET | PA/OPA |
| PP/BOPP/MOPP | PET/BOPET/MOPET | Alu |
| PP/BOPP/MOPP | PET/BOPET/MOPET | Coex PE |
| PP/BOPP/MOPP | PET/BOPET/MOPET | Coex PP |
| PP/BOPP/MOPP | PA/OPA | PE/MDO PE / BO PE |
| PP/BOPP/MOPP | PA/OPA | PP/BOPP/MOPP |
| PP/BOPP/MOPP | PA/OPA | PET/BOPET/MOPET |
| PP/BOPP/MOPP | PA/OPA | PA/OPA |
| PP/BOPP/MOPP | PA/OPA | Alu |
| PP/BOPP/MOPP | PA/OPA | Coex PE |
| PP/BOPP/MOPP | PA/OPA | Coex PP |
| PP/BOPP/MOPP | Alu | PE/MDO PE / BO PE |
| PP/BOPP/MOPP | Alu | PP/BOPP/MOPP |
| PP/BOPP/MOPP | Alu | PET/BOPET/MOPET |
| PP/BOPP/MOPP | Alu | PA/OPA |
| PP/BOPP/MOPP | Alu | Alu |
| PP/BOPP/MOPP | Alu | Coex PE |
| PP/BOPP/MOPP | Alu | Coex PP |
| PE/MDO PE / BO PE | PE/MDO PE / BO PE | PP/BOPP/MOPP |
| PE/MDO PE / BO PE | PE/MDO PE / BO PE | PET/BOPET/MOPET |
| PE/MDO PE / BO PE | PE/MDO PE / BO PE | PA/OPA |
| PE/MDO PE / BO PE | PE/MDO PE / BO PE | Alu |
| PE/MDO PE / BO PE | PE/MDO PE / BO PE | Coex PE |
| PE/MDO PE / BO PE | PE/MDO PE / BO PE | Coex PP |
| PE/MDO PE / BO PE | PP/BOPP/MOPP | PE/MDO PE / BO PE |
| PE/MDO PE / BO PE | PP/BOPP/MOPP | PP/BOPP/MOPP |
| PE/MDO PE / BO PE | PP/BOPP/MOPP | PET/BOPET/MOPET |
| PE/MDO PE / BO PE | PP/BOPP/MOPP | PA/OPA |
| PE/MDO PE / BO PE | PP/BOPP/MOPP | Alu |
| PE/MDO PE / BO PE | PP/BOPP/MOPP | Coex PE |
| PE/MDO PE / BO PE | PP/BOPP/MOPP | Coex PP |
| PE/MDO PE / BO PE | PET/BOPET/MOPET | PE/MDO PE / BO PE |
| PE/MDO PE / BO PE | PET/BOPET/MOPET | PP/BOPP/MOPP |
| PE/MDO PE / BO PE | PET/BOPET/MOPET | PET/BOPET/MOPET |
| PE/MDO PE / BO PE | PET/BOPET/MOPET | PA/OPA |
| PE/MDO PE / BO PE | PET/BOPET/MOPET | Alu |
| PE/MDO PE / BO PE | PET/BOPET/MOPET | Coex PE |
| PE/MDO PE / BO PE | PET/BOPET/MOPET | Coex PP |
| PE/MDO PE / BO PE | PA/OPA | PE/MDO PE / BO PE |
| PE/MDO PE / BO PE | PA/OPA | PP/BOPP/MOPP |
| PE/MDO PE / BO PE | PA/OPA | PET/BOPET/MOPET |
| PE/MDO PE / BO PE | PA/OPA | PA/OPA |
| PE/MDO PE / BO PE | PA/OPA | Alu |
| PE/MDO PE / BO PE | PA/OPA | Coex PE |
| PE/MDO PE / BO PE | PA/OPA | Coex PP |
| PE/MDO PE / BO PE | Alu | PE/MDO PE / BO PE |
| PE/MDO PE / BO PE | Alu | PP/BOPP/MOPP |
| PE/MDO PE / BO PE | Alu | PET/BOPET/MOPET |
| PE/MDO PE / BO PE | Alu | PA/OPA |
| PE/MDO PE / BO PE | Alu | Alu |
| PE/MDO PE / BO PE | Alu | Coex PE |
| PE/MDO PE / BO PE | Alu | Coex PP |
| Verbund PET-OPA | PE/MDO PE / BO PE | PE/MDO PE / BO PE |
| Verbund PET-OPA | PE/MDO PE / BO PE | PP/BOPP/MOPP |
| Verbund PET-OPA | PE/MDO PE / BO PE | PET/BOPET/MOPET |
| Verbund PET-OPA | PE/MDO PE / BO PE | PA/OPA |
| Verbund PET-OPA | PE/MDO PE / BO PE | Alu |
| Verbund PET-OPA | PE/MDO PE / BO PE | Coex PE |
| Verbund PET-OPA | PE/MDO PE / BO PE | Coex PP |
| Verbund PET-OPA | PP/BOPP/MOPP | PE/MDO PE / BO PE |
| Verbund PET-OPA | PP/BOPP/MOPP | PP/BOPP/MOPP |
| Verbund PET-OPA | PP/BOPP/MOPP | PET/BOPET/MOPET |
| Verbund PET-OPA | PP/BOPP/MOPP | PA/OPA |
| Verbund PET-OPA | PP/BOPP/MOPP | Alu |
| Verbund PET-OPA | PP/BOPP/MOPP | Coex PE |
| Verbund PET-OPA | PP/BOPP/MOPP | Coex PP |
| Verbund PET-OPA | PET/BOPET/MOPET | PE/MDO PE / BO PE |
| Verbund PET-OPA | PET/BOPET/MOPET | PP/BOPP/MOPP |
| Verbund PET-OPA | PET/BOPET/MOPET | PET/BOPET/MOPET |
| Verbund PET-OPA | PET/BOPET/MOPET | PA/OPA |
| Verbund PET-OPA | PET/BOPET/MOPET | Alu |
| Verbund PET-OPA | PET/BOPET/MOPET | Coex PE |
| Verbund PET-OPA | PET/BOPET/MOPET | Coex PP |
| Verbund PET-OPA | PA/OPA | PE/MDO PE / BO PE |
| Verbund PET-OPA | PA/OPA | PP/BOPP/MOPP |
| Verbund PET-OPA | PA/OPA | PET/BOPET/MOPET |
| Verbund PET-OPA | PA/OPA | PA/OPA |
| Verbund PET-OPA | PA/OPA | Alu |
| Verbund PET-OPA | PA/OPA | Coex PE |
| Verbund PET-OPA | PA/OPA | Coex PP |
| Verbund PET-OPA | Alu | PE/MDO PE / BO PE |
| Verbund PET-OPA | Alu | PP/BOPP/MOPP |
| Verbund PET-OPA | Alu | PET/BOPET/MOPET |
| Verbund PET-OPA | Alu | PA/OPA |
| Verbund PET-OPA | Alu | Alu |
| Verbund PET-OPA | Alu | Coex PE |
| Verbund PET-OPA | Alu | Coex PP |
| Verbund BOPP-OPA | PE/MDO PE / BO PE | PE/MDO PE / BO PE |
| Verbund BOPP-OPA | PE/MDO PE / BO PE | PP/BOPP/MOPP |
| Verbund BOPP-OPA | PE/MDO PE / BO PE | PET/BOPET/MOPET |
| Verbund BOPP-OPA | PE/MDO PE / BO PE | PA/OPA |
| Verbund BOPP-OPA | PE/MDO PE / BO PE | Alu |
| Verbund BOPP-OPA | PE/MDO PE / BO PE | Coex PE |
| Verbund BOPP-OPA | PE/MDO PE / BO PE | Coex PP |
| Verbund BOPP-OPA | PP/BOPP/MOPP | PE/MDO PE / BO PE |
| Verbund BOPP-OPA | PP/BOPP/MOPP | PP/BOPP/MOPP |
| Verbund BOPP-OPA | PP/BOPP/MOPP | PET/BOPET/MOPET |
| Verbund BOPP-OPA | PP/BOPP/MOPP | PA/OPA |
| Verbund BOPP-OPA | PP/BOPP/MOPP | Alu |
| Verbund BOPP-OPA | PP/BOPP/MOPP | Coex PE |
| Verbund BOPP-OPA | PP/BOPP/MOPP | Coex PP |
| Verbund BOPP-OPA | PET/BOPET/MOPET | PE/MDO PE / BO PE |
| Verbund BOPP-OPA | PET/BOPET/MOPET | PP/BOPP/MOPP |
| Verbund BOPP-OPA | PET/BOPET/MOPET | PET/BOPET/MOPET |
| Verbund BOPP-OPA | PET/BOPET/MOPET | PA/OPA |
| Verbund BOPP-OPA | PET/BOPET/MOPET | Alu |
| Verbund BOPP-OPA | PET/BOPET/MOPET | Coex PE |
| Verbund BOPP-OPA | PET/BOPET/MOPET | Coex PP |
| Verbund BOPP-OPA | PA/OPA | PE/MDO PE / BO PE |
| Verbund BOPP-OPA | PA/OPA | PP/BOPP/MOPP |
| Verbund BOPP-OPA | PA/OPA | PET/BOPET/MOPET |
| Verbund BOPP-OPA | PA/OPA | PA/OPA |
| Verbund BOPP-OPA | PA/OPA | Alu |
| Verbund BOPP-OPA | PA/OPA | Coex PE |
| Verbund BOPP-OPA | PA/OPA | Coex PP |
| Verbund BOPP-OPA | Alu | PE/MDO PE / BO PE |
| Verbund BOPP-OPA | Alu | PP/BOPP/MOPP |
| Verbund BOPP-OPA | Alu | PET/BOPET/MOPET |
| Verbund BOPP-OPA | Alu | PA/OPA |
| Verbund BOPP-OPA | Alu | Alu |
| Verbund BOPP-OPA | Alu | Coex PE |
| Verbund BOPP-OPA | Alu | Coex PP |
| Verbund PET-PET | PE/MDO PE / BO PE | PE/MDO PE / BO PE |
| Verbund PET-PET | PE/MDO PE / BO PE | PP/BOPP/MOPP |
| Verbund PET-PET | PE/MDO PE / BO PE | PET/BOPET/MOPET |
| Verbund PET-PET | PE/MDO PE / BO PE | PA/OPA |
| Verbund PET-PET | PE/MDO PE / BO PE | Alu |
| Verbund PET-PET | PE/MDO PE / BO PE | Coex PE |
| Verbund PET-PET | PE/MDO PE / BO PE | Coex PP |
| Verbund PET-PET | PP/BOPP/MOPP | PE/MDO PE / BO PE |
| Verbund PET-PET | PP/BOPP/MOPP | PP/BOPP/MOPP |
| Verbund PET-PET | PP/BOPP/MOPP | PET/BOPET/MOPET |
| Verbund PET-PET | PP/BOPP/MOPP | PA/OPA |
| Verbund PET-PET | PP/BOPP/MOPP | Alu |
| Verbund PET-PET | PP/BOPP/MOPP | Coex PE |
| Verbund PET-PET | PP/BOPP/MOPP | Coex PP |
| Verbund PET-PET | PET/BOPET/MOPET | PE/MDO PE / BO PE |
| Verbund PET-PET | PET/BOPET/MOPET | PP/BOPP/MOPP |
| Verbund PET-PET | PET/BOPET/MOPET | PA/OPA |
| Verbund PET-PET | PET/BOPET/MOPET | Alu |
| Verbund PET-PET | PET/BOPET/MOPET | Coex PE |
| Verbund PET-PET | PET/BOPET/MOPET | Coex PP |
| Verbund PET-PET | PA/OPA | PE/MDO PE / BO PE |
| Verbund PET-PET | PA/OPA | PP/BOPP/MOPP |
| Verbund PET-PET | PA/OPA | PET/BOPET/MOPET |
| Verbund PET-PET | PA/OPA | PA/OPA |
| Verbund PET-PET | PA/OPA | Alu |
| Verbund PET-PET | PA/OPA | Coex PE |
| Verbund PET-PET | PA/OPA | Coex PP |
| Verbund PET-PET | Alu | PE/MDO PE / BO PE |
| Verbund PET-PET | Alu | PP/BOPP/MOPP |
| Verbund PET-PET | Alu | PET/BOPET/MOPET |
| Verbund PET-PET | Alu | PA/OPA |
| Verbund PET-PET | Alu | Alu |
| Verbund PET-PET | Alu | Coex PE |
| Verbund PET-PET | Alu | Coex PP |
| Verbund BOPP-BOPP | PE/MDO PE / BO PE | PE/MDO PE / BO PE |
| Verbund BOPP-BOPP | PE/MDO PE / BO PE | PP/BOPP/MOPP |
| Verbund BOPP-BOPP | PE/MDO PE / BO PE | PET/BOPET/MOPET |
| Verbund BOPP-BOPP | PE/MDO PE / BO PE | PA/OPA |
| Verbund BOPP-BOPP | PE/MDO PE / BO PE | Alu |
| Verbund BOPP-BOPP | PE/MDO PE / BO PE | Coex PE |
| Verbund BOPP-BOPP | PE/MDO PE / BO PE | Coex PP |
| Verbund BOPP-BOPP | PP/BOPP/MOPP | PE/MDO PE / BO PE |
| Verbund BOPP-BOPP | PP/BOPP/MOPP | PET/BOPET/MOPET |
| Verbund BOPP-BOPP | PP/BOPP/MOPP | PA/OPA |
| Verbund BOPP-BOPP | PP/BOPP/MOPP | Alu |
| Verbund BOPP-BOPP | PP/BOPP/MOPP | Coex PE |
| Verbund BOPP-BOPP | PET/BOPET/MOPET | PE/MDO PE / BO PE |
| Verbund BOPP-BOPP | PET/BOPET/MOPET | PP/BOPP/MOPP |
| Verbund BOPP-BOPP | PET/BOPET/MOPET | PET/BOPET/MOPET |
| Verbund BOPP-BOPP | PET/BOPET/MOPET | PA/OPA |
| Verbund BOPP-BOPP | PET/BOPET/MOPET | Alu |
| Verbund BOPP-BOPP | PET/BOPET/MOPET | Coex PE |
| Verbund BOPP-BOPP | PET/BOPET/MOPET | Coex PP |
| Verbund BOPP-BOPP | PA/OPA | PE/MDO PE / BO PE |
| Verbund BOPP-BOPP | PA/OPA | PP/BOPP/MOPP |
| Verbund BOPP-BOPP | PA/OPA | PET/BOPET/MOPET |
| Verbund BOPP-BOPP | PA/OPA | PA/OPA |
| Verbund BOPP-BOPP | PA/OPA | Alu |
| Verbund BOPP-BOPP | PA/OPA | Coex PE |
| Verbund BOPP-BOPP | PA/OPA | Coex PP |
| Verbund BOPP-BOPP | Alu | PE/MDO PE / BO PE |
| Verbund BOPP-BOPP | Alu | PP/BOPP/MOPP |
| Verbund BOPP-BOPP | Alu | PET/BOPET/MOPET |
| Verbund BOPP-BOPP | Alu | PA/OPA |
| Verbund BOPP-BOPP | Alu | Alu |
| Verbund BOPP-BOPP | Alu | Coex PE |
| Verbund BOPP-BOPP | Alu | Coex PP |
| Papier/Papierverbund | PE/MDO PE / BO PE | PE/MDO PE / BO PE |
| Papier/Papierverbund | PE/MDO PE | PP/BOPP/MOPP |
| Papier/Papierverbund | PE/MDO PE | PET/BOPET/MOPET |
| Papier/Papierverbund | PE/MDO PE | PA/OPA |
| Papier/Papierverbund | PE/MDO PE | Alu |
| Papier/Papierverbund | PE/MDO PE | Coex PE |
| Papier/Papierverbund | PE/MDO PE | Coex PP |
| Papier/Papierverbund | PP/BOPP/MOPP | PE/MDO PE / BO PE |
| Papier/Papierverbund | PP/BOPP/MOPP | PP/BOPP/MOPP |
| Papier/Papierverbund | PP/BOPP/MOPP | PET/BOPET/MOPET |
| Papier/Papierverbund | PP/BOPP/MOPP | PA/OPA |
| Papier/Papierverbund | PP/BOPP/MOPP | Alu |
| Papier/Papierverbund | PP/BOPP/MOPP | Coex PE |
| Papier/Papierverbund | PP/BOPP/MOPP | Coex PP |
| Papier/Papierverbund | PET/BOPET/MOPET | PE/MDO PE / BO PE |
| Papier/Papierverbund | PET/BOPET/MOPET | PP/BOPP/MOPP |
| Papier/Papierverbund | PET/BOPET/MOPET | PET/BOPET/MOPET |
| Papier/Papierverbund | PET/BOPET/MOPET | PA/OPA |
| Papier/Papierverbund | PET/BOPET/MOPET | Alu |
| Papier/Papierverbund | PET/BOPET/MOPET | Coex PE |
| Papier/Papierverbund | PET/BOPET/MOPET | Coex PP |
| Papier/Papierverbund | PA/OPA | PE/MDO PE / BO PE |
| Papier/Papierverbund | PA/OPA | PP/BOPP/MOPP |
| Papier/Papierverbund | PA/OPA | PET/BOPET/MOPET |
| Papier/Papierverbund | PA/OPA | PA/OPA |
| Papier/Papierverbund | PA/OPA | Alu |
| Papier/Papierverbund | PA/OPA | Coex PE |
| Papier/Papierverbund | PA/OPA | Coex PP |
| Papier/Papierverbund | Alu | PE/MDO PE / BO PE |
| Papier/Papierverbund | Alu | PP/BOPP/MOPP |
| Papier/Papierverbund | Alu | PET/BOPET/MOPET |
| Papier/Papierverbund | Alu | PA/OPA |
| Papier/Papierverbund | Alu | Alu |
| Papier/Papierverbund | Alu | Coex PE |
| Papier/Papierverbund | Alu | Coex PP |
| Alu | PE/MDO PE/BO PE | PE/MDO PE / BO PE |
| Alu | PE/MDO PE | PP/BOPP/MOPP |
| Alu | PE/MDO PE | PET/BOPET/MOPET |
| Alu | PE/MDO PE | PA/OPA |
| Alu | PE/MDO PE | Alu |
| Alu | PE/MDO PE | Coex PE |
| Alu | PE/MDO PE | Coex PP |
| Alu | PP/BOPP/MOPP | PE/MDO PE / BO PE |
| Alu | PP/BOPP/MOPP | PP/BOPP/MOPP |
| Alu | PP/BOPP/MOPP | PET/BOPET/MOPET |
| Alu | PP/BOPP/MOPP | PA/OPA |
| Alu | PP/BOPP/MOPP | Alu |
| Alu | PP/BOPP/MOPP | Coex PE |
| Alu | PP/BOPP/MOPP | Coex PP |
| Alu | PET/BOPET/MOPET | PE/MDO PE / BO PE |
| Alu | PET/BOPET/MOPET | PP/BOPP/MOPP |
| Alu | PET/BOPET/MOPET | PET/BOPET/MOPET |
| Alu | PET/BOPET/MOPET | PA/OPA |
| Alu | PET/BOPET/MOPET | Alu |
| Alu | PET/BOPET/MOPET | Coex PE |
| Alu | PET/BOPET/MOPET | Coex PP |
| Alu | PA/OPA | PE/MDO PE / BO PE |
| Alu | PA/OPA | PP/BOPP/MOPP |
| Alu | PA/OPA | PET/BOPET/MOPET |
| Alu | PA/OPA | PA/OPA |
| Alu | PA/OPA | Alu |
| Alu | PA/OPA | Coex PE |
| Alu | PA/OPA | Coex PP |
| Alu | Alu | PE/MDO PE / BO PE |
| Alu | Alu | PP/BOPP/MOPP |
| Alu | Alu | PET/BOPET/MOPET |
| Alu | Alu | PA/OPA |
| Alu | Alu | Coex PE |
| Alu | Alu | Coex PP |

**Tabelle 2:**

| **Basisschicht 2** | **Mittelschicht 3** | **Deckschicht 4** |
|---|---|---|
| PET/BOPET/MOPET | PET/BOPET/MOPET | PET/BOPET/MOPET |
| PP/BOPP/MOPP | PP/BOPP/MOPP | PP/BOPP/MOPP |
| PP/BOPP/MOPP | PP/BOPP/MOPP | Coex PP |
| PE/MDO PE / BO PE | PE/MDO PE / BO PE | PE/MDO PE / BO PE |
| Verbund PET-PET | PET/BOPET/MOPET | PET/BOPET/MOPET |
| Verbund BOPP-BOPP | PP/BOPP/MOPP | PP/BOPP/MOPP |
| Verbund BOPP-BOPP | PP/BOPP/MOPP | Coex PP |
| Alu | Alu | Alu |

Eine beispielhafte Ausführungsform eines Monoverbunds kann drei Schichten (Basisschicht, Mittelschicht, Deckschicht) aus orientiertem Polypropylen aufweisen, wobei die Nenndicke der Basisschicht vorzugsweise zwischen 9 und 12 µm beträgt, die Nenndicke der Mittelschicht vorzugsweise zwischen 3 und 7 µm beträgt und die Nenndicke der Deckschicht vorzugsweise mindestens 20 µm beträgt.

Als Monoverbund lassen sich auch besonders dünne Verbundfolien, beispielsweise Kondensatorfolien aus OPP, herstellen, wobei beispielsweise alle drei Schichten jeweils eine Nenndicke von etwa 3 µm aufweisen können.

Als Kaschierkleber können herkömmliche bekannte Klebersysteme verwendet werden, beispielsweise ein- oder zweikomponentig verarbeitbare Kaschierklebstoffe auf Basis von Reinpolyesterharz, von Polyester- oder Polyether-Polyurethan, vorzugsweise gehärtet mit aromatischem oder aliphatischem Polyisocyanat, von einem Polyaminopolyurethan, vorzugsweise gehärtet mit Epichlorhydrinharz, oder von einem Epoxidharz, vorzugsweise gehärtet mit einem Polyamid oder mit einem Aminoamid. Außerdem kann ein Kaschierklebstoff auf Basis von ein- oder zweikomponentig verarbeitbarem Poly(meth)acrylat, vorzugsweise gehärtet mit aliphatischem Polyisocyanat, als Kaschierkleber vorgesehen sein.

Die in Tabelle 1 angeführten Schichtkombinationen können jeweils auf den Einsatzzweck abgestimmte Schichtdicken aufweisen, wobei für die einzelnen Materiallagen der Deckschicht und/oder der Basisschicht die folgenden Schichtdicken bevorzugt sind:

| | |
|---|---|
| Papier: | 15 g bis 150 g |
| Alu: | 4,0 µm bis 30 µm |
| PET: | 3 µm bis 50 µm, vorzugsweise 6 µm bis 36 µm |
| PP: | 18 µm bis 150 µm (geprägt oder ungeprägt) |
| PP MDO: | 3 µm bis 50 µm (geprägt oder ungeprägt) |
| BOPP: | 3 µm bis 50 µm, vorzugsweise 12 bis 30 µm (geprägt oder ungeprägt) |
| OPA: | 12 µm bis 25 µm |
| PE: | 18 µm bis 150 µm (geprägt oder ungeprägt) |
| PE MDO: | 5 µm bis 50 µm (geprägt oder ungeprägt) |
| PE BO: | 5 µm bis 50 µm (geprägt oder ungeprägt) |

Für die Mittelschicht sind die folgenden Schichtdicken (bezogen auf die Normbereiche 6) bevorzugt:

| | |
|---|---|
| Alu: | 4,0 µm bis 30 µm |
| PET: | 3 µm bis 50 µm, vorzugsweise 6 µm bis 36 µm |
| PP: | 18 µm bis 150 µm (geprägt oder ungeprägt) |
| PP MDO: | 3 µm bis 50 µm (geprägt oder ungeprägt) |
| BOPP: | 3 µm bis 50 µm, vorzugsweise 12 bis 30 µm (geprägt oder ungeprägt) |
| OPA: | 12 µm bis 25 µm |
| PE: | 18 µm bis 150 µm (geprägt oder ungeprägt) |
| PE MDO: | 5 µm bis 50 µm (geprägt oder ungeprägt) |
| PE BO: | 5 µm bis 50 µm (geprägt oder ungeprägt) |

Alle Materialschichten können mit zusätzlichen Funktionsschichten (z.B. Barriereschichten, Haftverstärkerschichten, Haftvermittler oder Primer) versehen sein, wie zum Beispiel Metallisierungen, AlOx, SiOx, EvOH, Lackierungen, PVOH-Lack, etc.

Zusätzlich können einzelne Schichten beispielsweise durch Tiefdruck, Flexodruck oder Digitaldruck bedruckt sein.

Die oben dargelegten Verbundfolien lassen sich insbesondere zur Erzielung der folgenden Vorteile bzw. Effekte optimieren:
- Herstellung von Verbundfolien geringer Dichte
- Erzielung einer höheren mechanischen Festigkeit bei geringer Dicke der verwendeten Materialien
- Erhöhung der Steifigkeit der Verbundfolie
- Stabilisierung des Verbundes
- Herstellung von Monoverbunden
- Einstellung eines definierten Wärmedurchgangs und Isolation des Verpackungsgutes
- Verzögerung von Belastungen des Verpackungsgutes durch Temperatureinwirkung (Hitze, Kälte) und/oder Stoßeinwirkung
- Erhöhung des Berstdruckwiderstands bzw. des Platzdrucks
- Erhöhung der Durchstoßfestigkeit
- Vorteilhafte Beeinflussung haptischer Eigenschaften, wie etwa Ausbildung von rutschhemmenden Greifflächen
- Implementierung von sichtbaren und/oder verdeckten fälschungssicheren Merkmalen
- Erzeugung einer spezifischen, optisch ansprechenden Gestaltung

### Bezugszeichen:

Verbundfolie (1)
Basisschicht (2)
Mittelschicht (3)
Deckschicht (4)
Normbereichen (5)
Strukturbereichen (6)
Toleranzfeld (7, 7')
basisseitige Oberfläche (8)
deckseitige Oberfläche (9)
Folienebene (10)
Soll-Grenzflächen 11,12
Wellen und Faltungen 13
Kaschierkleberschicht 14, 15
Basisfläche 16
Deckfläche (17)
Siegellage (18)
Basismaterialzuführung 19
Kaschierkleber-Aufbringung 20
Kaschierkleber 21
Heizelement 22
Entlüftung 23
Rakel 24
Trocknungswalze 25
Nuten 26
Vorsprünge 27
Presseinrichtung 28
Positivprofilwalze 29
Negativprofilwalze 30
erste Anpresswalze 31
zweite Anpresswalze 32
Folienzuführung 33
Dehnorgan 34
Beutelverpackung 35
Verschlusselement (36)
gedehnte Bereiche 37
Siegelfläche 38
Öffnung 39
Seitenlage 40, 40'

## Patentansprüche

1. Verbundfolie (1) bestehend aus einer zumindest einschichtigen Basisschicht (2), einer zumindest einschichtigen Deckschicht (4), und einer zwischen der Basisschicht (2) und der Deckschicht (4) angeordneten zumindest einschichtigen Mittelschicht (3), wobei die Verbundfolie (1) Normalbereiche (5) aufweist, in denen die Basisschicht (2), die Mittelschicht (3) und die Deckschicht (4) eben aneinanderliegend miteinander verbunden sind und eine basisseitige Oberfläche (8) und eine deckseitige Oberfläche (9) der Mittelschicht (3) sich innerhalb von parallel zur Folienebene (10) und entlang von Soll-Grenzflächen (11, 12) für die basisseitige Oberfläche (8) bzw. deckseitige Oberfläche (9) verlaufenden Toleranzfeldern (7) befinden, wobei die Toleranzfelder (7) üblichen produktionstechnisch bedingten Herstellungstoleranzen entsprechen, wobei die Verbundfolie (1) ein flächiges Muster von an die Normalbereiche (5) angrenzenden Strukturbereichen (6) aufweist und wobei die basisseitige Oberfläche (8) und/oder die deckseitige Oberfläche (9) der Mittelschicht (3) in den Strukturbereichen (6) eine aus den Toleranzfeldern (7) herausführende Welligkeit aufweisen, wobei die Deckschicht (4) eine auf die Mittelschicht (3) einschichtig oder mehrschichtig aufextrudierte Schicht oder eine auf die Mittelschicht (3) kaschierte Schicht ist.

2. Verbundfolie (1) nach Anspruch 1, **dadurch gekennzeichnet, dass** das Verhältnis der Nenndicke (D_{B}) der Basisschicht (2) zur Nenndicke (D_{M}) der Mittelschicht (3) und/oder das Verhältnis der Nenndicke (D_{D}) der Deckschicht (4) zur Nenndicke (D_{M}) der Mittelschicht (3) größer als 2, vorzugsweise größer als 3 ist.

3. Verbundfolie (1) nach Anspruch 1 oder 2, **dadurch gekennzeichnet, dass** die Nenndicke (D_{B}) der Basisschicht (2) zwischen 20 % und 75 %, vorzugsweise zwischen 25 % und 40 % der Gesamtnenndicke (D) der Verbundfolie beträgt, dass die Nenndicke (D_{M}) der Mittelschicht (3) zwischen 5 % und 30 %, vorzugsweise zwischen 5 % und 15 % der Gesamtnenndicke (D) der Verbundfolie beträgt, und dass die Nenndicke (D_{D}) der Deckschicht (4) zwischen 20 % und 80 %, vorzugsweise zwischen 40 % und 70 % der Gesamtnenndicke (D) der Verbundfolie beträgt.

4. Verbundfolie (1) nach einem der Ansprüche 1 bis 3, **dadurch gekennzeichnet, dass** die Strukturbereiche (6) durch vor dem Verbinden der Mittelschicht (3) mit der Basisschicht (2) und der Deckschicht (4) in die Mittelschicht (3) eingebrachte gedehnte Bereiche (37) gebildet sind.

5. Verbundfolie (1) nach einem der Ansprüche 1 bis 4, **dadurch gekennzeichnet, dass** die Basisschicht (2) eine an die basisseitige Oberfläche (8) angrenzende Kaschierkleberschicht (14) aufweist und/oder dass die Deckschicht (4) eine an die deckseitige Oberfläche (9) angrenzende Kaschierkleberschicht (15) aufweist.

6. Verbundfolie (1) nach einem der Ansprüche 1 bis 5, **dadurch gekennzeichnet, dass** die Basisschicht (2) eine auf die Mittelschicht (3) aufextrudierte Schicht ist, und/oder dass die Deckschicht (4) eine auf die Mittelschicht (3) aufextrudierte Schicht ist.

7. Verbundfolie (1) nach einem der Ansprüche 1 bis 6, **dadurch gekennzeichnet, dass** das Material der Basisschicht (2) ausgewählt ist aus Papier, Metall, insbesondere Aluminium, Polyethylenterephthalat (PET), monoaxial oder biaxial orientiertem Polyethylenterephthalat (MOPET/BOPET), monoaxial, in Maschinenlaufrichtung oder biaxial orientiertem Polyethylen (OPE/BOPE/MDO PE), Polypropylen (PP), monoaxial oder biaxial orientiertem Polypropylen (MOPP/BOPP), Polyamid (PA), orientiertem Polyamid (OPA) und/oder Mischungen und/oder Schichtverbunden und/oder zumindest teilweise coextrudierten Schichtverbunden dieser Materialien, dass das Material der Deckschicht (4) ausgewählt ist aus Metall, insbesondere Aluminium, Polyethylen (PE), monoaxial, in Maschinenlaufrichtung oder biaxial orientiertem Polyethylen (OPE/BOPE/MDO PE), Polypropylen (PP), monoaxial oder biaxial orientiertem Polypropylen (MOPP/BOPP), Polyethylenterephthalat (PET) und/oder Mischungen und/oder Schichtverbunden und/oder zumindest teilweise coextrudierten Schichtverbunden dieser Materialien, wobei die Deckschicht (4) gegebenenfalls an ihrer der Mittelschicht abgewandten Deckfläche eine Beschichtung mit einem Heißsiegellack (HSL) aufweist, und dass das Material der Mittelschicht (5) ausgewählt ist aus Polyethylen (PE), monoaxial, in Maschinenlaufrichtung oder biaxial orientiertem Polyethylen (OPE/BOPE/MDO PE), Polypropylen (PP), monoaxial oder biaxial orientiertem Polypropylen (MOPP/BOPP), Polyethylenterephthalat (PET), monoaxial oder biaxial orientiertem Polyethylenterephthalat (MOPET/BOPET), orientiertem Polyamid (OPA) und/oder Mischungen und/oder Schichtverbunden und/oder zumindest teilweise coextrudierten Schichtverbunden dieser Materialien.

8. Verbundfolie (1) nach einem der Ansprüche 1 bis 7, **dadurch gekennzeichnet, dass** die Basisschicht (2), die Mittelschicht (3) und die Deckschicht (4) zumindest im Wesentlichen aus dem selben Material bestehen, wobei das Material vorzugsweise ausgewählt ist aus monoaxial und/oder biaxial orientiertem Polyethylenterephthalat (MOPET/BOPET), Polyethylenterephthalat (PET), und monoaxial oder biaxial orientiertem Polypropylen (MOPP/BOPP).

9. Verbundfolie (1) nach einem der Ansprüche 1 bis 8, **dadurch gekennzeichnet, dass** die Deckschicht (4) an ihrer der Mittelschicht (3) abgewandten Deckfläche (16) eine Siegellage (18) aufweist.

10. Verbundfolie (1) nach einem der Ansprüche 1 bis 9, **dadurch gekennzeichnet, dass** die Basisschicht (2) und/oder die Deckschicht (3) unabhängig voneinander als erfindungsgemäße Verbundfolie (1) gemäß einem der Ansprüche 1 bis 9 ausgebildet sind.

11. Beutelverpackung (35) welche zumindest eine Verbundfolie (1) gemäß einem der Ansprüche 1 bis 10 aufweist, wobei die Beutelverpackung vorzugsweise ein Verschlusselement (36), wie etwa ein Zipperverschluss, Ausgießer und/oder ein formschlüssiges Verschlusselement, wie etwa ein Klett-, Klebe- oder Klemmverschluss aufweist und wobei vorzugsweise zumindest eine Deckfläche (17) der Verbundfolie (1) zu der dem Beutelinhalt ausgesetzten Beutelinnenseite hin angeordnet ist.

12. Verfahren zur Herstellung einer Verbundfolie (1), wobei das Verfahren die folgenden Schritte aufweist:
- Bereitstellen einer zumindest einschichtigen Folie als Mittelschicht (3);
- flächiges Verbinden einer basisseitigen Oberfläche (8) der Mittelschicht (3) mit einer Basisschicht (2);
- flächiges Verbinden einer deckseitigen Oberfläche (9) der Mittelschicht (4) mit einer Deckschicht (4);
wobei vor dem flächigen Verbinden der Mittelschicht (3) mit der Basisschicht (2) und mit der Deckschicht (4) durch bereichsweises Dehnen der Mittelschicht (2) in die Mittelschicht (3) Flächenüberschüsse eingebracht werden, und wobei beim nachfolgenden flächigen Verbinden in der Verbundfolie (1) Strukturbereiche (6) ausgebildet werden, in denen die basisseitige Oberfläche (8) und/oder die deckseitige Oberfläche (9) der Mittelschicht (3) eine größere Fläche aufweisen, als die entsprechenden, der Mittelschicht (3) abgewendeten Außenflächen der Basisschicht (2) und/oder der Deckschicht (4) in den entsprechenden Strukturbereichen (6), wobei das flächige Verbinden der Deckschicht (4) mit der Mittelschicht (3) durch ein Verfahren erfolgt, das ausgewählt ist aus Kaschieren und/oder einschichtigem Aufextrudieren und/oder mehrschichtigen Aufextrudieren.

13. Verfahren nach Anspruch 12, **dadurch gekennzeichnet, dass** das bereichsweise Dehnen mittels einer Positivprofilwalze (29) und einer Negativprofilwalze (30) mit korrespondierenden Profilen ausgeführt wird, zwischen denen die Mittelschicht (3) hindurchgeführt wird.

14. Verfahren nach einem der Ansprüche 12 bis 13, **dadurch gekennzeichnet, dass** das flächige Verbinden der Basisschicht (2) mit der Mittelschicht (3) durch ein Verfahren erfolgt, das ausgewählt ist aus Kaschieren und/oder einschichtigem Aufextrudieren und/oder mehrschichtigen Aufextrudieren.

15. Verfahren nach einem der Ansprüche 12 bis 14, **dadurch gekennzeichnet, dass** die Parameter bei der Herstellung gezielt zur Bildung von Lufteinschlüssen in den Strukturbereichen ausgewählt werden.

## Claims

1. Composite film (1) consisting of an at least single-layer base layer (2), an at least single-layer top layer (4), and an at least single-layer middle layer (3) arranged between the base layer (2) and the top layer (4), wherein the composite film (1) comprises normal regions (5) in which the base layer (2), the middle layer (3) and the top layer (4) are interconnected so as to be flush against one another, and a base-side surface (8) and a top-side surface (9) of the middle layer (3) are within tolerance zones (7) which extend parallel to the film plane (10) and along intended interfaces (11, 12) for the base-side surface (8) and top-side surface (9), respectively, wherein the tolerance zones (7) correspond to routine production-related manufacturing tolerances, wherein the composite film (1) comprises a surface pattern of structural regions (6) abutting the normal regions (5), and wherein the base-side surface (8) and/or the top-side surface (9) of the middle layer (3) comprise a wave leading out of the tolerance zones (7) in the structural regions (6), wherein the top layer (4) is a layer extruded in a single-layer or multi-layer manner onto the middle layer (3) or is a layer laminated onto the middle layer (3).

2. Composite film (1) according to claim 1, **characterized in that** the ratio of the nominal thickness (D_{B}) of the base layer (2) to the nominal thickness (D_{M}) of the middle layer (3) and/or the ratio of the nominal thickness (D_{D}) of the top layer (4) to the nominal thickness (D_{M}) of the middle layer (3) is greater than 2, preferably greater than 3.

3. Composite film (1) according to either claim 1 or claim 2, **characterized in that** the nominal thickness (D_{B}) of the base layer (2) is between 20% and 75%, preferably between 25% and 40% of the total nominal thickness (D) of the composite film, **in that** the nominal thickness (D_{M}) of the middle layer (3) is between 5% and 30%, preferably between 5% and 15% of the total nominal thickness (D) of the composite film, and **in that** the nominal thickness (D_{D}) of the top layer (4) is between 20% and 80%, preferably between 40% and 70% of the total nominal thickness (D) of the composite film.

4. Composite film (1) according to any of claims 1 to 3, **characterized in that** the structural regions (6) are formed by stretched regions (37) introduced into the middle layer (3) before the middle layer (3) is connected to the base layer (2) and the top layer (4).

5. Composite film (1) according to any of claims 1 to 4, **characterized in that** the base layer (2) comprises a laminating adhesive layer (14) abutting the base-side surface (8) and/or **in that** the top layer (4) comprises a laminating adhesive layer (15) abutting the top-side surface (9).

6. Composite film (1) according to any of claims 1 to 5, **characterized in that** the base layer (2) is a layer extruded onto the middle layer (3), and/or **in that** the top layer (4) is a layer extruded onto the middle layer (3).

7. Composite film (1) according to any of claims 1 to 6, **characterized in that** the material of the base layer (2) is selected from: paper; metal, in particular aluminum; polyethylene terephthalate (PET); monoaxially or biaxially oriented polyethylene terephthalate (MOPET/BOPET); monoaxially, machine-direction or biaxially oriented polyethylene (OPE/BOPE/MDO PE); polypropylene (PP); monoaxially or biaxially oriented polypropylene (MOPP/BOPP); polyamide (PA); oriented polyamide (OPA) and/or mixtures and/or layer composites and/or at least partially coextruded layer composites of said materials, **in that** the material of the top layer (4) is selected from: metal, in particular aluminum; polyethylene (PE); monoaxially, machine-direction or biaxially oriented polyethylene (OPE/BOPE/MDO PE); polypropylene (PP); monoaxially or biaxially oriented polypropylene (MOPP/BOPP); polyethylene terephthalate (PET) and/or mixtures and/or layer composites and/or at least partially coextruded layer composites of said materials, the top layer (4) optionally comprising a coating having, on the top face thereof that faces away from the middle layer, a heat seal lacquer (HSL), and **in that** the material of the middle layer (5) is selected from: polyethylene (PE); monoaxially, machine-direction or biaxially oriented polyethylene (OPE/BOPE/MDO PE); polypropylene (PP); monoaxially or biaxially oriented polypropylene (MOPP/BOPP); polyethylene terephthalate (PET); monoaxially or biaxially oriented polyethylene terephthalate (MOPET/BOPET); oriented polyamide (OPA) and/or mixtures and/or layer composites and/or at least partially coextruded layer composites of said materials.

8. Composite film (1) according to any of claims 1 to 7, **characterized in that** the base layer (2), the middle layer (3) and the top layer (4) consist at least substantially of the same material, the material preferably being selected from monoaxially and/or biaxially oriented polyethylene terephthalate (MOPET/BOPET), polyethylene terephthalate (PET), and monoaxially or biaxially oriented polypropylene (MOPP/BOPP).

9. Composite film (1) according to any of claims 1 to 8, **characterized in that** the top layer (4), on the top face (16) thereof that faces away from the middle layer (3), comprises a sealing layer (18).

10. Composite film (1) according to any of claims 1 to 9, **characterized in that** the base layer (2) and/or the top layer (3) are formed independently of one another as a composite film (1) according to the invention in accordance with any of claims 1 to 9.

11. Bag packaging (35) which comprises at least one composite film (1) according to any of claims 1 to 10, wherein the bag packaging preferably comprises a closure element (36), such as a zipper, pourer and/or a form-fitting closure element, such as a hook-and-loop, adhesive or clamping closure, and wherein preferably at least one top face (17) of the composite film (1) is arranged towards the inside of the bag which is exposed to the bag contents.

12. Method for manufacturing a composite film (1), wherein the method comprises the following steps:
- providing an at least single-layer film as the middle layer (3);
- connecting a base-side surface (8) of the middle layer (3) to a base layer (2) face to face;
- connecting a top-side surface (9) of the middle layer (4) to a top layer (4) face to face;
wherein excess surface areas are introduced into the middle layer (3) by stretching the middle layer (2) in regions before the middle layer (3) is connected to the base layer (2) and to the top layer (4) face to face, and wherein structural regions (6) are formed in the composite film (1) during the subsequent face-to-face connection, in which structural regions the base-side surface (8) and/or the top-side surface (9) of the middle layer (3) have a larger surface area than the corresponding outer faces of the base layer (2) and/or the top layer (4) that face away from the middle layer (3) in the corresponding structural regions (6), wherein the top layer (4) is connected to the middle layer (3) face to face by means of a method which is selected from lamination and/or single-layer extrusion and/or multi-layer extrusion.

13. Method according to claim 12, **characterized in that** the stretching in regions is carried out by means of a positive profile roller (29) and a negative profile roller (30) having corresponding profiles, between which the middle layer (3) is passed.

14. Method according to either claim 12 or claim 13, **characterized in that** the base layer (2) is connected to the middle layer (3) face to face by means of a method which is selected from lamination and/or single-layer extrusion and/or multi-layer extrusion.

15. Method according to any of claims 12 to 14, **characterized in that** the parameters for the manufacture are specifically selected in order to form air pockets in the structural regions.

## Revendications

1. Film composite (1) constitué d'une couche de base (2) au moins monocouche, d'une couche de recouvrement (4) au moins monocouche, et d'une couche centrale (3) au moins monocouche disposée entre la couche de base (2) et la couche de recouvrement (4), le film composite (1) présentant des régions normales (5) dans lesquelles la couche de base (2), la couche centrale (3) et la couche de recouvrement (4) sont reliées les unes aux autres bout à bout, et une surface (8) côté base et une surface (9) côté recouvrement de la couche centrale (3) se trouvant à l'intérieur de plages de tolérances (7) s'étendant parallèlement au plat du film (10) et le long de surfaces limites de consigne (11, 12) pour la surface (8) côté base ou pour la surface (9) côté recouvrement, les plages de tolérances (7) correspondant à des tolérances de fabrication usuelles nécessaires pour cette technique de production, le film composite (1) présentant un motif plat de régions structurées (6) adjacentes aux régions normales (5), et la surface (8) côté base et/ou la surface (9) côté recouvrement de la couche centrale (3) présentant, dans les régions structurées (6), une ondulation sortant des plages de tolérances (7), la couche de recouvrement (4) étant une couche extrudée sur la couche centrale (3) en une ou plusieurs couches ou une couche doublée sur la couche centrale (3).

2. Film composite (1) selon la revendication 1, **caractérisé en ce que** le rapport entre l'épaisseur nominale (D_{B}) de la couche de base (2) et l'épaisseur nominale (D_{M}) de la couche centrale (3) et/ou le rapport entre l'épaisseur nominale (D_{D}) de la couche de recouvrement (4) et l'épaisseur nominale (D_{M}) de la couche centrale (3) est supérieur à 2, de préférence supérieur à 3.

3. Film composite (1) selon la revendication 1 ou 2, **caractérisé en ce que** l'épaisseur nominale (D_{B}) de la couche de base (2) est comprise entre 20 et 75 %, de préférence entre 25 et 40 % de l'épaisseur nominale totale (D) du film composite, **en ce que** l'épaisseur nominale (D_{M}) de la couche centrale (3) est comprise entre 5 et 30 %, de préférence entre 5 et 15 % de l'épaisseur nominale totale (D) du film composite, et **en ce que** l'épaisseur nominale (D_{D}) de la couche de recouvrement (4) est comprise entre 20 et 80 %, de préférence entre 40 et 70 % de l'épaisseur nominale totale (D) du film composite.

4. Film composite (1) selon l'une des revendications 1 à 3, **caractérisé en ce que** les régions structurées (6) sont formées par des régions allongées (37) réalisées dans la couche centrale (3) avant la liaison de couche centrale (3) à la couche de base (2) et à la couche de recouvrement (4).

5. Film composite (1) selon l'une des revendications 1 à 4, **caractérisé en ce que** la couche de base (2) présente une couche adhésive de stratification (14) adjacente à la surface de la face de base (8) et/ou que la couche de recouvrement (4) présente une couche d'adhésif à contrecoller (15) adjacente à la surface (9) côté recouvrement.

6. Film composite (1) selon l'une des revendications 1 à 5, **caractérisé en ce que** la couche de base (2) est une couche extrudée sur la couche centrale (3), et/ou **en ce que** la couche de recouvrement (4) est une couche extrudée sur la couche centrale (3).

7. Film composite (1) selon l'une des revendications 1 à 6, **caractérisé en ce que** le matériau de la couche de base (2) est choisi parmi le papier, le métal, en particulier l'aluminium, le polyéthylène téréphtalate (PET), le polyéthylène téréphtalate orienté monoaxialement ou biaxialement (MOPET/BOPET), le polyéthylène orienté monoaxialement, dans le sens machine ou biaxialement (OPE/BOPE/MDO PE), le polypropylène (PP), le polypropylène orienté monoaxialement ou biaxialement (MOPP/BOPP), le polyamide (PA), le polyamide orienté (OPA) et/ou des mélanges et/ou des composites stratifiés et/ou des composites stratifiés au moins partiellement coextrudés desdits matériaux, **en ce que** le matériau de la couche de recouvrement (4) est choisi parmi le métal, en particulier l'aluminium, le polyéthylène (PE), le polyéthylène orienté monoaxialement, dans le sens machine ou biaxialement (OPE/BOPE/MDO PE), le polypropylène (PP), le polypropylène orienté monoaxialement ou biaxialement (MOPP/BOPP), le polyéthylène téréphtalate (PET) et/ou des mélanges et/ou des composites stratifiés et/ou des composites stratifiés au moins partiellement coextrudés desdits matériaux, la couche de recouvrement (4) présentant éventuellement un revêtement d'une laque thermosoudable (HSL) sur sa surface de recouvrement opposée à la couche centrale, et **en ce que** le matériau de la couche centrale (5) est choisi parmi le polyéthylène (PE), le polyéthylène orienté monoaxialement, dans le sens machine ou biaxialement (OPE/BOPE/MDO PE), le polypropylène (PP), le polypropylène orienté monoaxialement ou biaxialement (MOPP/BOPP), le polyéthylène téréphtalate (PET), le polyéthylène téréphtalate orienté monoaxialement ou biaxialement (MOPET/BOPET), le polyamide orienté (OPA) et/ou des mélanges et/ou des composites stratifiés et/ou des composites stratifiés au moins partiellement coextrudés desdits matériaux.

8. Film composite (1) selon l'une des revendications 1 à 7, **caractérisé en ce que** la couche de base (2), la couche centrale (3) et la couche de recouvrement (4) sont constituées au moins sensiblement du même matériau, le matériau étant de préférence choisi parmi le polyéthylène téréphtalate orienté monoaxialement et/ou biaxialement (MOPET/BOPET), le polyéthylène téréphtalate (PET) et le polypropylène orienté monoaxialement ou biaxialement (MOPP/BOPP).

9. Film composite (1) selon l'une des revendications 1 à 8, **caractérisé en ce que** la couche de recouvrement (4) présente une couche de scellage (18) sur sa surface de recouvrement (16) opposée à la couche centrale (3).

10. Film composite (1) selon l'une des revendications 1 à 9, **caractérisé en ce que** la couche de base (2) et/ou la couche de recouvrement (3) sont formées indépendamment l'une de l'autre sous la forme d'un film composite (1) selon l'invention, selon l'une des revendications 1 à 9.

11. Emballage en forme de sachet (35) présentant au moins un film composite (1) selon l'une des revendications 1 à 10, l'emballage en forme de sachet présentant de préférence un élément de fermeture (36), tel qu'une fermeture à glissière, un bec verseur et/ou un élément de fermeture par liaison de forme, tel qu'une fermeture velcro, adhésive ou à encliquetage, et au moins une surface de recouvrement (17) du film composite (1) étant de préférence disposée vers la face intérieure du sachet exposée au contenu du sachet.

12. Procédé de production d'un film composite (1), le procédé comprenant les étapes suivantes :
- fourniture d'un film au moins monocouche comme couche centrale (3) ;
- liaison en surface d'une surface latérale (8) côté base de la couche centrale (3) à une couche de base (2) ;
- liaison en surface d'une surface de recouvrement (9) de la couche centrale (4) à une couche de recouvrement (4) ;
des excédents de surface étant insérés dans la couche centrale (3) par étirage, dans certaines régions, de la couche centrale (2) avant la liaison en surface de la couche centrale (3) à la couche de base (2) et à la couche de recouvrement (4), et des régions structurées (6) étant formées dans le film composite (1) lors de la liaison en surface ultérieure, régions structurées dans lesquelles la surface (8) côté base et/ou la surface (9) côté recouvrement de la couche centrale (3) présentent une surface supérieure aux surfaces extérieures correspondantes de la couche de base (2) et/ou de la couche de recouvrement (4) dans les régions structurées (6) correspondantes, lesquelles surfaces extérieures sont opposées à la couche centrale (3), la liaison en surface de la couche de recouvrement (4) à la couche centrale (3) étant réalisée par un procédé choisi parmi le doublage et/ou l'extrusion monocouche et/ou l'extrusion multicouche.

13. Procédé selon la revendication 12, **caractérisé en ce que** l'étirage dans certaines régions est effectué au moyen d'un rouleau à profil positif (29) et d'un rouleau à profil négatif (30) comportant des profils correspondants, entre lesquels on fait passer la couche centrale (3).

14. Procédé selon l'une des revendications 12 à 13, **caractérisé en ce que** la liaison en surface de la couche de base (2) à la couche centrale (3) est réalisée par un procédé choisi parmi le doublage et/ou l'extrusion monocouche et/ou l'extrusion multicouche.

15. Procédé selon l'une des revendications 12 à 14, **caractérisé en ce que**, lors de la fabrication, les paramètres sont choisis spécifiquement pour la formation d'inclusions d'air dans les régions structurées.
